# FASCICULE DE BREVET EUROPEEN

(11) **EP 2 956 300 B1**
(45) Date de publication et mention de la délivrance du brevet: **12.04.2023**
(21) Numéro de dépôt: 14708629.2
(22) Date de dépôt: 13.02.2014
(51) Int. Cl.: B32B 27/34, B32B 1/08, C09K 5/04, C08G 69/08, C08G 69/26, C08G 69/36, C08L 77/02, C08L 77/06, F16L 59/14, F25B 41/00, C08L 23/26, C08L 51/06

(54) **UTILISATION DE COPOLYAMIDE SEMI-AROMATIQUE POUR LE TRANSPORT DE FLUIDE FRIGORIGÈNE**
VERWENDUNG VON HALBAROMATISCHEN COPOLYAMIDEN ZUM TRANSPORT EINER KÜHLFLÜSSIGKEIT
USE OF SEMI-AROMATIC COPOLYAMIDE FOR TRANSPORTING REFRIGERANT FLUID

(30) Priorité: 18.02.2013 FR 1351361
(43) Date de publication de la demande: 23.12.2015
(73) Titulaire: Arkema France, 92700 Colombes (FR)
(72) Inventeur: BLONDEL, Philippe, F-27300 Bernay (FR); BRULE, Benoït, F-27170 Beaumont-le-Roger (FR); GAMACHE, Eric, 76000 Rouen (FR); MEURICE PIERRAT, Estelle, F-27500 Corneville-sur-Isle (FR)
(86) Numéro de dépôt international: PCT/FR2014/050290
(87) Numéro de publication internationale: WO 2014/125218

(56) Documents cités:
- EP-A2- 1 505 099
- WO-A1-2010/015785
- WO-A1-2013/054026
- WO-A2-2011/015790
- US-A1- 2011 123 749
- US-A1- 2011 155 359

## Description

### DOMAINE DE L'INVENTION

La présente invention concerne l'utilisation d'une composition à base de copolyamide semi-aromatique pour fabriquer des éléments de circuit destinés au transport d'un fluide frigorigène (tel que le R-1234yf), notamment dans le domaine de la climatisation automobile. La présente invention est telle que définie dans les présentes revendications.

### ARRIERE-PLAN TECHNIQUE

Le transport des fluides frigorigènes dans les circuits de compression de vapeur, tels que ceux mis en oeuvre notamment dans la climatisation automobile, nécessite l'utilisation de matériaux présentant un ensemble de propriétés mécaniques, thermiques et chimiques bien spécifiques.

Les éléments de ces circuits (et notamment les tubulures) doivent notamment :
- être étanches aux fluides transportés (et en particulier aux composés frigorigènes fluorocarbonés), ainsi qu'à l'eau et à l'oxygène ;
- présenter une résistance chimique aux fluides transportés, ainsi qu'à l'eau et à l'oxygène, afin d'éviter une dégradation excessive sur le long terme ;
- présenter une résistance mécanique suffisante mais aussi une flexibilité suffisante (en particulier dans la climatisation automobile, où les contraintes d'encombrement et de montage sous le capot imposent de plier les tubulures) ;
- présenter une résistance thermique satisfaisante, compte tenu du fait que les fluides transportés peuvent être portés à une température élevée, et que la température de l'environnement peut également être élevée (en particulier dans la climatisation automobile, les pièces concernées pouvant être disposées au voisinage du moteur).

Les contraintes ci-dessus sont particulièrement difficiles à respecter avec certains fluides frigorigènes. Par exemple, le fluide R-1234yf (2,3,3,3-tétrafluoropropène), utilisable notamment en climatisation automobile, est plus réactif chimiquement que les fluides de la génération précédente, tel que le R-134a (1,1,1,2-tétrafluoroéthane). La résistance chimique et les propriétés barrière des éléments des circuits de compression de vapeur sont donc d'autant plus critiques. La difficulté de respecter les contraintes ci-dessus est encore aggravée du fait que certains lubrifiants utilisés en mélange avec les composés frigorigènes (tels que des polyalkylènes glycols ou PAG) ont également tendance à être agressifs pour ces éléments de circuits.

A l'heure actuelle, les tubulures pour le transport de fluides frigorigènes dans la climatisation automobile comprennent des portions métalliques rigides (généralement en aluminium) et des portions flexibles en tubes multicouches. Certains de ces tubes multicouches sont connus sous le nom anglais de tubes « *veneers* » ; ils comportent successivement, de l'extérieur vers l'intérieur, une première couche d'élastomère de type caoutchouc, une tresse de renfort, une deuxième couche d'élastomère de type caoutchouc et une couche interne à base de polyamide.

Dans les modèles disponibles dans le commerce, la couche interne à base de polyamide (ou PA) peut être par exemple un PA 6 (polycaprolactame) formulé (avec ou sans plastifiant, avec ou sans modifiant choc, avec ou sans stabilisant), un copolyamide PA 6/6.6 formulé (avec ou sans plastifiant, avec ou sans modifiant choc, avec ou sans stabilisant), ou encore un alliage de PA 6 ou de PA 6.6 (polyhexaméthylène adipamide) avec des polyoléfines et des polyoléfines fonctionnalisées (produit commercialisé sous la marque Orgalloy^{®} par Arkema).

Le document US 2007/0048475 décrit une variante de ces tubes multicouches, selon laquelle la couche interne est à base de PA 9.T (polymère de 1,9-nonandiamine ou de 2-méthyl-1,8-ottandiamine et d'acide Téréphtalique), éventuellement mélangé à une autre résine polyamide.

Le document US 2012/0279605 décrit une autre variante des tubes multicouches ci-dessus, selon laquelle la couche interne est une composition comprenant un polyamide, un modifiant choc, un antioxydant phénolique, un plastifiant et un stabilisant thermique à base de cuivre. Le polyamide peut être choisi parmi une liste de polymères, dans laquelle figure notamment le PA 6/6.T (copolymère comportant des segments de PA 6 et des segments de PA 6.T, c'est-à-dire de polymère d'hexaméthylènediamine et d'acide téréphtalique). Le polyamide préféré est toutefois le PA 6.

Le document US 2011/0136957 décrit une résine pour couche interne d'un circuit de compression de vapeur, la résine étant censée être chimiquement résistante vis-à-vis du R-1234yf. La résine est choisie parmi une longue liste de polymères, dans laquelle figurent les polyamides et notamment les polyamides semi-aromatiques. Dans les exemples, les résines utilisées sont à base de PTFE (polytétrafluoroéthylène) ou de polyimide.

Le document US 2011/0183095 décrit des tubes pour le transport de fluides de transfert de chaleur dans la climatisation automobile, comprenant une couche interne à base de PA 6.10 (polyhexaméthylène sébaçamide) et une couche externe à base d'un polyamide tel qu'un polyphthalamide. Le polyphthalamide exemplifié est le PA 9.T.

Le document US 2011/0239674 décrit des joints pour circuit de compression de vapeur, fabriqués à partir des mêmes matériaux. Le document US 2012/0018995 décrit également des assemblages de tubes et joints fabriqués à partir des mêmes matériaux. Les documents WO 2010/061289 et US 2011/0277492 décrivent encore des éléments de circuit de compression de vapeur fabriqués à partir de ces mêmes matériaux.

Le document US 2011/0155359 concerne des tubes notamment pour le transport de R-1234yf, fabriqués à partir d'une résine à base de polyamide semi-aromatique. Le copolyamide semi-aromatique utilisé dans les exemples est le PA 6.6/6.T (copolymère de PA 6.6 et de PA 6.T).

Dans un contexte plus général, le document EP 1505099 décrit des compositions destinées à remplacer des caoutchoucs ou des métaux, ou à être utilisées comme matériaux de câbles électriques, ou pour la fabrication de réservoirs, tuyaux et récipients. Ces compositions comprennent des copolyamides de formule générale PA X/Y.Ar, (Ar signifiant aromatique) parmi lesquels figure le PA 11/10.T, qui résulte de la condensation de l'acide aminoundécanoïque, de la 1,10-décanediamine et de l'acide téréphtalique.

Le document WO 2006/037615 décrit des compositions à base de polyamides semi-cristallins pour la fabrication de tubes flexibles pour le transport de divers fluides tels que des carburants (essence ou diesel), du liquide de freinage hydraulique, et autres. Les PA 6.10, PA 6.12 et PA 10.10 sont cités en exemple.

Le document EP 1717022 concerne des tubes multicouches pour diverses applications, et plus particulièrement pour le transport de carburant dans des véhicules, du réservoir au moteur. Ces tubes comportent une couche intermédiaire en polyamide, par exemple en PA 6.10 (polyhexaméthylène sébaçamide) ou PA 6.12 (polyhexaméthylène dodécanamide).

Les documents WO 2010/015785 et WO 2010/015786 décrivent des compositions à base de copolyamide semi-aromatique de formule générale A/10.T pour la fabrication d'objets divers, comme des biens de consommation courante tels que des équipements électriques, électroniques ou automobiles, du matériel chirurgical, de l'emballage ou encore des articles de sport.

Des applications similaires sont visées dans le document WO 2011/015790, qui concerne des compositions à base de copolyamide 11/10.T, 12/10.T, etc.

Le document WO 2011/077032 cherche à fournir un polyamide semi-aromatique utilisable de manière générale dans la fabrication d'objets divers, comme des composants électroniques destinés à des équipements électriques ou électroniques dans le domaine des transports routiers, de la circulation routière ou ferroviaire, dans le domaine aéronautique, audio-vidéo, des jeux vidéo et également dans le secteur industriel. Ce polyamide semi-aromatique peut être, entre autres, de formule 10/10.T, 11/10.T, 12/10.T, etc.

Le document US 2011/0123749 décrit un copolyamide correspondant à la condensation de 1,6-hexanediamine, de 1,10-décanediamine, d'acide téréphtalique ainsi que d'au moins un autre monomère choisi parmi le groupe des acides dicarboxyliques comprenant de 8 à 18 atomes de carbone, du laurolactame, de l'acide aminolaurique et des combinaisons de ceux-ci. Les utilisations visées sont les récipients et les conduites dans le secteur automobiles, par exemple les conduites de carburant, d'huile, de liquide de refroidissement ou d'urée.

Aucun des documents ci-dessus ne décrit de matériau polymère présentant des propriétés pleinement satisfaisantes pour le transport de fluide de transfert de chaleur, notamment dans la climatisation automobile, et notamment lorsque le fluide de transfert de chaleur est un composé hydrofluorocarboné (HFO) tel que le R-1234yf (mélangé à une huile de lubrification).

Il existe donc un besoin de mettre au point des éléments de circuit de compression de vapeur présentant un bon compromis entre leurs propriétés d'étanchéité au fluide de transfert de chaleur, à l'eau et à l'oxygène, leur résistance chimique au fluide de transfert de chaleur, à l'eau et à l'oxygène, leur résistance mécanique, leur flexibilité et leur résistance thermique. Ce besoin se fait particulièrement ressentir dans le domaine de la climatisation automobile, notamment lorsque le fluide de transfert de chaleur est du R-1234yf, additionné d'un lubrifiant tel qu'une huile polyalkylène glycol (PAG) ou encore polyol ester (POE).

### RESUME DE L'INVENTION

L'invention concerne en premier lieu un dispositif de transfert de chaleur comprenant un circuit de compression de vapeur qui comporte au moins un élément de circuit de compression de vapeur, et de préférence une pluralité de tels éléments, ledit élément de circuit de compression de vapeur, comprenant au moins une couche constituée d'une composition comprenant un copolyamide de formule X/10.T/Y, dans laquelle :
- X représente soit les restes d'un aminoacide aliphatique comprenant de 8 à 18 atomes de carbone, soit le motif X₁.X₂ représentant les restes issus de la condensation d'une diamine aliphatique comprenant de 6 à 18 atomes de carbone et d'un diacide (cyclo)aliphatique comprenant de 6 à 18 atomes de carbone ;
- 10.T représente les restes de la condensation d'une décanediamine et de l'acide téréphtalique ; et
- Y représente les restes de la condensation d'une diamine aliphatique comprenant de 9 à 14 atomes de carbone et d'un diacide aromatique, Y étant différent du motif 10.T;
   la proportion molaire de motifs 10.T dans le copolyamide étant supérieure à 0 % ;
   la proportion molaire de motifs Y par rapport à l'ensemble des motifs 10.T et Y étant de 0 à 30 % ; et
   la proportion de motifs X étant de 0,4 à 0,8 mole pour une mole de motifs semi-aromatiques 10.T et Y, ledit élément étant un tube multicouche, comprenant de préférence successivement :
- une couche interne qui est ladite couche constituée d'une composition comprenant un copolyamide ;
- optionnellement, une première couche intermédiaire disposée au-dessus de celle-ci, constituée d'une première composition comprenant un matériau élastomère ;
- optionnellement, une deuxième couche intermédiaire disposée au-dessus de celle-ci, constituée par un textile de renfort ;
- une couche externe disposée au-dessus de celle-ci, constituée d'une deuxième composition comprenant un matériau élastomère ;
chaque composition comprenant un matériau élastomère étant de préférence une composition comprenant un caoutchouc éthylène-propylène ou un caoutchouc éthylène-propylène-diène monomère. Selon un mode de réalisation, le copolyamide de formule X/10.T/Y est un copolyamide de formule X/10.T.

Selon un mode de réalisation, X représente soit les restes d'un aminoacide aliphatique comprenant de 10 à 12 atomes de carbone, soit le motif X₁.X₂ représentant les restes issus de la condensation d'une diamine aliphatique comprenant de 6 à 12 atomes de carbone et d'un diacide aliphatique comprenant de 6 à 12 atomes de carbone.

Selon un mode de réalisation, Y représente un motif 10.1, 9.T, 12.T ou 14.T.

Selon un mode de réalisation, le copolyamide de formule X/10.T/Y est choisi parmi les copolyamides de formules 11/10.T, 12/10.T, 6.10/10.T, 6.12/10.T, 10.6/10.T, 10.10/10.T, 10.12/10.T, 12.12/10.T et 10.14/10.T et de manière plus particulièrement préférée est un copolyamide de formule 11/10.T.

Selon un mode de réalisation, la proportion de motifs X dans le copolyamide est de 0,5 à 0,7 mole pour une mole de motifs semi-aromatiques 10.T et Y.

Selon un mode de réalisation, le copolyamide X/10.T/Y est présent dans la composition en une proportion massique de 30 à 99 %, de préférence de 40 à 95 %, de manière plus particulièrement préférée de 50 à 85 % ; et / ou la composition comprend en outre :
- optionnellement, une ou plusieurs polyoléfines fonctionnalisées ou non, de préférence en une proportion massique de 5 à 40 %, de manière plus particulièrement préférée de 12 à 36 % ;
- optionnellement, un ou plusieurs plastifiants, de préférence en une proportion massique de 1 à 10 %, de manière plus particulièrement préférée de 2 à 7 % ;
- optionnellement, un ou plusieurs additifs choisis parmi les adjuvants aidant à la transformation, les charges, les stabilisants thermiques, les stabilisants UV, les agents nucléants, les colorants, les pigments, les agents de démoulage, les agents d'ignifugation, les agents tensio-actifs, les azurants optiques, les antioxydants et leurs mélanges.

Selon un mode de réalisation, le circuit de compression de vapeur contient un fluide de transfert de chaleur choisi parmi les composés hydrocarbures, hydrofluorocarbures (HFO), éthers, hydrofluoroéthers ou fluorooléfines, notamment parmi les fluoropropènes, les fluoropropanes et les fluoroéthanes, et de manière plus particulièrement préférée parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci ; et de manière tout particulièrement préférée ledit fluide de transfert de chaleur comprenant ou étant du 2,3,3,3-tétrafluoropropène.

Selon un mode de réalisation, le fluide de transfert de chaleur est additionné d'un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et / ou les polyvinyléthers ; le lubrifiant étant de manière plus particulièrement préférée un polyalkylène glycol ou un polyol ester.

La teneur en lubrifiant dans le mélange réfrigérant + lubrifiant est par exemple de 0,05 à 10% en poids, de préférence de 1 à 5%.

Selon un mode de réalisation, l'élément de circuit de compression de vapeur appartient à un circuit de compression de vapeur intégré dans un dispositif choisi parmi les dispositifs de climatisation mobile ou stationnaire, les dispositifs de réfrigération, les dispositifs de congélation, les dispositifs de chauffage par pompe à chaleur et les cycles de Rankine ; et de préférence intégré dans un dispositif de climatisation automobile.

Le terme « intégré » signifie que le circuit de compression de vapeur appartient au dispositif et que par conséquent, l'élément de circuit de compression de vapeur, qui appartient au circuit de compression de vapeur, appartient également au dispositif.

En d'autres termes, le dispositif est constitué d'un circuit de compression de vapeur comprenant un ou plusieurs éléments de circuit de compression de vapeur.

Selon un mode de réalisation, l'élément de circuit de compression de vapeur est un élément de connexion ou une conduite.

Selon un mode de réalisation, ladite couche constituée d'une composition comprenant un copolyamide X/10.T/Y est disposée sur une surface interne de l'élément.

Selon un mode de réalisation, l'élément de circuit de compression de vapeur est un objet extrudé.

Selon un mode de réalisation, le dispositif de transfert de chaleur est choisi parmi les dispositifs de climatisation mobile ou stationnaire, les dispositifs de réfrigération, les dispositifs de congélation, les dispositifs de chauffage par pompe à chaleur et les cycles de Rankine ; ledit dispositif étant de préférence un dispositif de climatisation automobile.

Selon un mode de réalisation, le circuit de compression de vapeur contient un fluide de transfert de chaleur choisi parmi les composés hydrocarbures, hydrofluorocarbures (HFO), éthers, hydrofluoroéthers ou fluorooléfines, notamment parmi les fluoropropènes, les fluoropropanes et les fluoroéthanes, et de préférence parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci ; et de manière particulièrement préférée le fluide de transfert de chaleur comprend ou est du 2,3,3,3-tétrafluoropropène.

Selon un mode de réalisation, le fluide de transfert de chaleur est additionné d'un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et / ou les polyvinyléthers ; le lubrifiant étant de manière plus particulièrement préférée un polyalkylène glycol ou un polyol ester.

L'invention a également pour objet l'utilisation d'un élément de circuit de compression de vapeur comprenant au moins une couche constituée d'une composition comprenant un copolyamide de formule X/10.T/Y pour le transport d'un fluide de transfert de chaleur dans un circuit de compression de vapeur, dans laquelle :
- X représente soit les restes d'un aminoacide aliphatique comprenant de 8 à 18 atomes de carbone, soit le motif X₁.X₂ représentant les restes issus de la condensation d'une diamine aliphatique comprenant de 6 à 18 atomes de carbone et d'un diacide (cyclo)aliphatique comprenant de 6 à 18 atomes de carbone ;
- 10.T représente les restes de la condensation d'une décanediamine et de l'acide téréphtalique ; et
- Y représente les restes de la condensation d'une diamine aliphatique comprenant de 9 à 14 atomes de carbone et d'un diacide aromatique, Y étant différent du motif 10.T;
   la proportion molaire de motifs 10.T étant supérieure à 0 % ;
   la proportion molaire de motifs Y par rapport à l'ensemble des motifs 10.T et Y étant de 0 à 30 % ; et
   la proportion de motifs X étant de 0,4 à 0,8 mole pour une mole de motifs aromatiques 10.T et Y,
   ledit élément étant un tube multicouche tel que décrit ci-dessus.

Selon un mode de réalisation, la composition est telle que décrite ci-dessus.

Selon un mode de réalisation, le fluide de transfert de chaleur est tel que décrit ci-dessus.

L'invention a également pour objet un procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le circuit de compression de vapeur comprend un élément de circuit de compression de vapeur tel que décrit ci-dessus.

Selon un mode de réalisation, ce procédé de chauffage ou de refroidissement est un procédé de chauffage, de climatisation, de réfrigération ou de congélation, et de préférence est un procédé de climatisation dans un véhicule automobile.

Selon un mode de réalisation, le fluide de transfert de chaleur utilisé dans le chauffage ou le refroidissement est tel que décrit ci-dessus.

Est également décrit un procédé de fabrication de l'élément de circuit décrit ci-dessus, comprenant une étape de dépôt d'une couche d'une composition comprenant un copolyamide de formule X/10.T/Y.

Selon un mode de réalisation, le dépôt de cette couche est effectué par injection, extrusion, extrusion-soufflage, co-extrusion ou multi-injection.

Selon un mode de réalisation, l'élément de circuit est un tube multicouche tel que décrit ci-dessus, le procédé de fabrication de cet élément comprenant l'extrusion successive, sur un mandrin, de la couche interne, optionnellement de la première couche intermédiaire, optionnellement de la deuxième couche intermédiaire puis de la couche externe.

La présente invention permet de surmonter les inconvénients de l'état de la technique. Elle fournit plus particulièrement une composition à base de copolyamide semi-aromatique qui permet de produire des éléments de circuit de compression de vapeur présentant un bon compromis entre leurs propriétés d'étanchéité au fluide de transfert de chaleur, à l'eau et à l'oxygène, leur résistance chimique au fluide de transfert de chaleur, à l'eau et à l'oxygène, leur résistance mécanique, leur flexibilité et leur résistance thermique ; et ce notamment dans le domaine de la climatisation automobile, et notamment lorsque le fluide de transfert de chaleur est un HFO tel que le R-1234yf, additionné d'un lubrifiant tel qu'une huile PAG ou POE.

Par rapport aux compositions à base de polyamide PA 6 qui sont utilisées aujourd'hui dans le commerce en tant que couche interne de tubes multicouches pour les circuits de compression de vapeur de climatisation automobile, les compositions de l'invention permettent la fabrication de couche présentant notamment des propriétés améliorées :
- de barrière aux fluides de transfert de chaleur (notamment R-1234yf, mais également R-134a par exemple) ; et/ou
- de stabilité dimensionnelle à l'eau ; et/ou
- de barrière à l'eau ; et/ou
- de tenue thermique et chimique en présence de R-1234yf et de lubrifiant du type PAG ; et/ou
- de tenue thermique à long terme ; et/ou
- de flexibilité.

Par rapport aux compositions à base de polyphthalamide PA 6.T ou PA 9.T mentionnées dans certains des documents énumérés ci-dessus, les compositions de l'invention permettent la fabrication de couche présentant notamment des propriétés améliorées :
- de stabilité dimensionnelle à l'eau ; et/ou
- de barrière à l'eau ; et/ou
- de tenue thermique à long terme ; et/ou
- de flexibilité ; et/ou
- d'adhésion à un élastomère ; et/ou
- de mise en forme (aptitude à la transformation).

### BREVE DESCRIPTION DES FIGURES

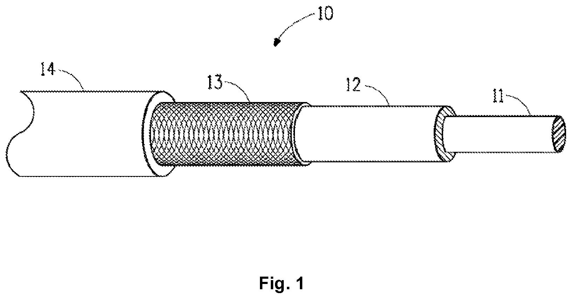

La **figure 1** représente de façon schématique un tube multicouche selon un mode de réalisation de l'invention.

### DESCRIPTION DE MODES DE REALISATION DE L'INVENTION

L'invention est maintenant décrite plus en détail et de façon non limitative dans la description qui suit.

### Copolvamide semi-aromatique utilisé selon l'invention

La nomenclature utilisée pour définir les polyamides est décrite dans la norme ISO 1874-1:1992 « *Plastiques* - *Matériaux polyamides (PA) pour moulage et extrusion* - *Partie 1 : Désignation »,* notamment en page 3 (tableaux 1 et 2).

L'invention repose sur l'utilisation d'un copolyamide semi-aromatique de formule générale X/10.T/Y, étant entendu que cette formule recouvre soit les copolymères X/10.T (comportant des motifs X et 10.T uniquement), soit les terpolymères X/10.T/Y (comportant des motifs X, 10.Tet Y).

Dans la suite, le copolyamide X/10.T/Y est appelé « *copolyamide de l'invention »* et la composition contenant ce copolyamide est appelée *« composition de l'invention* » pour plus de simplicité.

On rappelle que X représente soit les restes d'un aminoacide aliphatique comprenant de 8 à 18 atomes de carbone, soit le motif X₁.X₂ représentant les restes issus de la condensation d'une diamine comprenant de 6 à 18 atomes de carbone et d'un diacide (cyclo)aliphatique comprenant de 6 à 18 atomes de carbone ; que 10.T représente les restes de la condensation d'une décanediamine et de l'acide téréphtalique, dans des proportions stoechiométriques ; et que Y représente les restes de la condensation d'une diamine aliphatique comprenant de 9 à 14 atomes de carbone et d'un diacide aromatique (Y est différent du motif 10.T, celui-ci étant déjà présent dans le copolyamide par ailleurs).

La décanediamine condensée avec l'acide téréphtalique (motif 10.T) peut être linéaire ou ramifiée, ou un mélange de plusieurs décanediamines. De préférence, il s'agit de la 1,10-décanediamine (linéaire), qui est moins sensible à l'eau.

En ce qui concerne le motif Y, la diamine peut être linéaire ou ramifiée, de préférence linéaire, et comporter 9, ou 10, ou 11, ou 12, ou 13, ou 14 atomes de carbone. Le diacide aromatique peut notamment être l'acide téréphtalique ou l'acide isophtalique. La longueur de la chaîne diamine présente une importance pour la résistance du copolyamide à l'eau.

Y peut notamment représenter les motifs 9.T, 12.T, 14.T ou 10.I (I faisant référence à l'acide isophtalique).

La proportion molaire de motifs Y par rapport à l'ensemble (la somme) des motifs 10.T et Y est de 0 à 30 %, de préférence de 0 à 20 %, et de manière plus particulièrement préférée de 0 à 10 %.

La proportion de motifs X est de 0,4 à 0,8 mole pour une mole de motifs semi-aromatiques (c'est-à-dire par mole de l'ensemble des motifs 10.T et éventuellement Y), de préférence de 0,5 à 0,7 pour une mole de motifs aromatiques.

Selon un mode de réalisation, le copolyamide X/10.T/Y est dépourvu de motifs Y.

X peut être choisi parmi un motif obtenu à partir d'un aminoacide, un motif obtenu à partir d'un lactame et un motif X₁.X₂ répondant à la formule (diamine aliphatique en Ca).(diacide (cyclo)aliphatique en Cb), avec a représentant le nombre de carbones de la diamine et b représentant le nombre de carbones du diacide, a et b étant chacun compris entre 6 et 18 (bornes comprises).

Le copolyamide X/10.T/Y présente avantageusement un indice de polymolécularité, noté Ip inférieur ou égal à 3,5. De préférence, l'indice de polymolécularité dudit copolyamide est compris entre 2,0 et 3,0 (bornes comprises.

Cet indice est mesuré de manière classique et connue de l'homme du métier, par chromatographie d'exclusion stérique ou de perméation de gel. De préférence, l'indice de polymolécularité des copolyamides de l'invention est mesuré par chromatographie de perméation de gel. Plus particulièrement, il est mesuré dans un solvant approprié pour le copolyamide, tel qu'un solvant fluoré comme par exemple l'hexafluoroisopropanol, à une température comprise entre 20°C et 50°C, de préférence à 40°C.

Il est précisé que l'expression « *compris entre »* utilisée dans les paragraphes précédents, mais également dans le reste de la présente description, doit s'entendre comme incluant chacune des bornes mentionnées.

Concernant plus précisément la signification du motif X, lorsque X représente un aminoacide, il peut être notamment choisi parmi l'acide 9-aminononanoïque (X=9), l'acide 10-aminodécanoïque (X=10), l'acide 10-aminoundécanoïque (X=11), l'acide 12-aminododécanoïque (X=12) et l'acide 11-aminoundécanoïque (X=11) ainsi que ses dérivés, notamment l'acide N - heptyl-11-aminoundécanoïque.

A la place d'un aminoacide, on peut également envisager un mélange de deux, trois,... ou plusieurs aminoacides tels que décrits ici. Les copolyamides formés comprennent alors trois, quatre,... ou plus, motifs, respectivement.

Lorsque X représente un lactame, il peut être choisi parmi le caprylolactame, le pelargolactame, le décanolactame, l'undecanolactame, et le lauryllactame (X=12).

De préférence, X désigne un motif obtenu à partir d'un monomère choisi parmi l'acide 10-aminoundécanoïque (noté 11), l'acide amino-11-undécanoïque (noté 11), l'acide amino-12-dodécanoïque (noté 12) et le lauryllactame (noté L12).

Parmi les combinaisons envisageables, les copolyamides suivants présentent un intérêt particulièrement marqué : il s'agit des copolyamides répondant à l'une des formules choisies parmi 11/10.T et 12/10.T.

Lorsque le motif X est un motif répondant à la formule X₁.X₂, le motif (diamine en Ca) est choisi parmi les diamines aliphatiques, linéaires ou ramifiées.

Lorsque la diamine est linéaire, de formule H₂N-(CH₂)ₐ-NH₂, le monomère (diamine en Ca) est préférentiellement choisi parmi l'hexanediamine (a=6), l'heptanediamine (a=7), l'octanediamine (a=8), la nonanediamine (a=9), la décanediamine (a=10), l'undécanediamine (a=11), la dodécanediamine (a=12), la tridécanediamine (a=13), la tétradécanediamine (a=14), l'hexadécanediamine (a=16), l'octadécanediamine (a=18), l'octadécènediamine (a=18) et les diamines obtenues à partir d'acides gras.

Lorsque la diamine est ramifiée, elle peut comporter un ou plusieurs substituants méthyle ou éthyle sur la chaîne principale. Par exemple, le monomère (diamine en Ca) peut avantageusement être choisi parmi la 2,2,4-triméthyl-1,6-hexanediamine, la 2,4,4-triméthyl-1,6-hexanediamine, la 2-méthyl-1,5-pentanediamine, la 2-méthyl-1,8-octanediamine.

Par l'expression, « *monomère (diacide (cyclo)aliphatique en Cb)* », on entend un monomère aliphatique, qui peut être linéaire ou ramifié, ou cycloaliphatique.

Lorsque le monomère (diacide en Cb) est aliphatique et linéaire, il est choisi parmi l'acide adipique (b=6), l'acide heptanedioïque (b=7), l'acide octanedioïque (b=8), l'acide azélaïque (b=9), l'acide sébacique (b=10), l'acide undécanedioïque (b=11), l'acide dodécanedioïque (b=12), l'acide brassylique (b=13), l'acide tetradécanedioïque (b=14), l'acide hexadécanedioïque (b=16), l'acide octadécanedioïque (b=18) et l'acide octadécènedioïque (b=18).

Lorsque le diacide est cycloaliphatique, il peut comporter les squelettes carbonés suivants : norbornylméthane, cyclohexylméthane, dicyclohexylméthane, dicyclohexylpropane, di(méthylcyclohexyl)propane.

Parmi toutes les combinaisons possibles pour les copolyamides X/10.T, dans lesquelles X est un motif (diamine aliphatique en Ca).(diacide (cyclo)aliphatique en Cb), on retiendra en particulier les copolyamides répondant à l'une des formules choisies parmi 6.10/10.T, 6.12/10.T, 10.6/10.T, 10.10/10.T, 10.12/10.T, 12.12/10.T et 10.14/10.T.

Concernant les terpolymères X/10.T/Y (avec présence de motifs Y), on retiendra en particulier les copolyamides répondant à l'une des formules choisies parmi 11/10.T/10.I, 12/10.T/10.I, 6.10/10.T/10.I, 6.12/10.T/10.I, 10.6/10.T/10.I, 10.10/10.T/10.I, 10.12/10.T/10.I, 12.12/10.T/10.I et 10.14/10.T/10.I; 11/10.T/9.T, 12/10.T/9.T, 6.10/10.T/9.T, 6.12/10.T/9.T, 10.6/10.T/9.T, 10.10/10.T/9.T, 10.12/10.T/9.T, 12.12/10.T/9.T et 10.14/10.T/9.T ; 11/10.T/12.T, 12/10.T/12.T, 6.10/10.T/12.T, 6.12/10.T/12.T, 10.6/10.T/12.T, 10.10/10.T/12.T, 10.12/10.T/12.T, 12.12/10.T/12.T et 10.14/10.T/12.T ; 11/10.T/14.T, 12/10.T/14.T, 6.10/10.T/14.T, 6.12/10.T/14.T, 10.6/10.T/14.T, 10.10/10.T/14.T, 10.12/10.T/14.T, 12.12/10.T/14.T et 10.14/10.T/14.T.

Si la plupart des comonomères ou produits de départ envisagés dans la présente description (aminoacides, diamines, diacides) sont saturés, rien n'interdit d'envisager qu'ils puissent être partiellement insaturés.

On notera par exemple que le diacide carboxylique en C18 peut être l'acide octadécanedioïque, qui est saturé, ou bien l'acide octadécènedioïque, qui présente quant à lui une insaturation.

Le copolyamide de l'invention peut comporter des monomères provenant de ressources issues de matières premières renouvelables, c'est-à-dire comportant du carbone organique issu de la biomasse et déterminé selon la norme ASTM D6866. Ces monomères issus de matières premières renouvelables peuvent être la 1,10-décanediamine ou, lorsqu'ils sont présents, notamment l'acide 11-aminoundécanoïque, les diamines et diacides aliphatiques et linéaires tels que définis ci-dessus.

Les copolyamides de l'invention peuvent être préparés par polycondensation des comonomères définis ci-dessus, par exemple en présence d'acide hypophosphoreux ou d'au moins un de ses sels.

La description détaillée d'un tel procédé de polycondensation figure notamment dans le document WO 2010/015786.

En particulier, selon un premier mode de réalisation, ce procédé comprend l'étape unique de réaction entre l'aminoacide X (ou les diacides et diamines en Ca et Cb) et la combinaison stoechiométrique de la décanediamine et de l'acide téréphtalique (et éventuellement acide isophtalique), en présence d'hypophosphite de sodium, d'eau et éventuellement d'autres additifs. Les conditions de durée, de température et de pression sont décrites plus en détail dans le document WO 2010/015786.

Selon un deuxième mode de réalisation, ce procédé comprend deux étapes. La première étape conduit à l'obtention d'un oligomère diacide, qui va se polycondenser au cours de la seconde étape avec la décanediamine, selon l'enchaînement suivant : première étape de réaction entre l'acide téréphtalique (et éventuellement isophtalique) avec l'aminoacide X, en présence d'un sel hypophosphite ; et seconde étape de réaction de l'oligomère diacide ainsi formé à l'étape précédente avec la décanediamine. Les conditions de durée, de température et de pression sont décrites plus en détail dans le document WO 2010/015786. Dans le cas où X est un mélange (diamine aliphatique en Ca).(diacide (cyclo)aliphatique en Cb), il est possible d'introduire de 10 à 100 % en poids de la diamine en Ca dans la première étape de réaction, le reste éventuel de la diamine en Ca étant introduit avec le diacide (cyclo)aliphatique en Cb) dans la seconde étape de réaction.

Selon un troisième mode de réalisation, ce procédé comprend deux étapes : première étape de réaction de l'aminoacide X avec l'acide téréphtalique (et éventuellement l'acide isophtalique), et avec de 10 à 90 % en poids de la décanediamine, en présence d'un sel hypophosphite ; et seconde étape de réaction de l'oligomère produit de la première étape avec le solde de la décanediamine en une ou plusieurs fois. Les conditions de durée, de température et de pression sont décrites plus en détail dans le document WO 2010/015786. Dans le cas où X est un mélange (diamine aliphatique en Ca).(diacide (cyclo)aliphatique en Cb), il est possible d'introduire de 10 à 100 % en poids de la diamine en Ca dans la première étape, le reste éventuel de la diamine en Ca étant introduit avec le diacide (cyclo)aliphatique en Cb dans la seconde étape de réaction.

Selon un quatrième mode de réalisation, ce procédé comprend deux étapes : première étape de réaction de l'aminoacide X avec l'acide téréphtalique (et éventuellement l'acide isophtalique) et toute la diamine, en présence d'un sel hypophosphite ; un oligomère est obtenu par vidange du réacteur sous pression de vapeur d'eau et cristallisation dudit oligomère ; seconde étape de post-polymérisation à pression atmosphérique ou sous vide de l'oligomère produit de la première étape. Les conditions de durée, de température et de pression sont décrites plus en détail dans le document WO 2010/015786.

Les procédés de polycondensation selon la présente invention peuvent être mis en oeuvre dans tout réacteur classiquement utilisé en polymérisation, tel que des réacteurs à agitateurs à ancre ou à rubans. Des procédés de polymérisation continus sont également possibles. Cependant, lorsque le procédé comporte une seconde étape, telle que définie ci-dessus, il peut aussi être mise en oeuvre dans un réacteur horizontal ou finisseur, plus communément appelé par l'homme de l'art « *finisher».* Les finishers peuvent être équipés de dispositif de mise sous vide, d'introduction de réactif (ajout de diamine), qui peut être étagé ou non, et peuvent fonctionner dans un large intervalle de température.

Il est possible d'ajouter au copolyamide X/10.T/Y, à l'issue de ce procédé ou au cours de la seconde étape (lorsque le procédé comporte deux étapes), outre le solde de diamine, des additifs habituels des polyamides, tels que définis ci-après. De préférence, les additifs au copolyamide de l'invention se présentent en une quantité de 1 à 70 %, de préférence de 5 à 60 %, ou de 15 à 50 %, en poids par rapport au poids de la composition.

Le copolyamide X/10.T/Y selon l'invention présente de préférence une teneur en fins de chaîne amine supérieure ou égale à 20 µeq/g, une teneur en fins de chaîne acide inférieure ou égale à 100 µeq/g, et une teneur en fins de chaîne non réactive supérieure ou égale à 20 µeq/g.

La teneur en fins de chaîne de chacune des fonctions amine, acide et la fonction non réactive est mesurée de manière classique par RMN (Résonance Magnétique Nucléaire).

De préférence, la teneur en fins de chaîne amine est comprise entre 25 et 100 µeq/g, et de préférence comprise entre 30 et 58 µeq/g.

De préférence, la teneur en fins de chaîne acide est comprise entre 2 et 80 µeq/g, et de préférence comprise entre 15 et 50 µeq/g.

De préférence, la teneur en fins de chaîne non réactive est avantageusement supérieure ou égale à 30 µeq/g, et de préférence comprise entre 35 et 200 µeq/g.

Afin d'ajuster la teneur en fins de chaîne, il est possible d'utiliser des agents de terminaison de chaînes, c'est-à-dire des composés capables de réagir avec les fonctions terminales amine et/ou acide carboxylique des polyamides, stoppant ainsi la réactivité de l'extrémité de la macromolécule, et donc la polycondensation.

Les agents de terminaison de chaînes appropriés pour réagir avec la fonction terminale amine peuvent être des acides monocarboxyliques, des anhydrides, tels que l'anhydride phtalique, des acides monohalogénés, des monoesters ou les monoisocyanates. De préférence, les acides monocarboxyliques sont utilisés. Ils peuvent être choisis parmi les acides aliphatiques monocarboxyliques, tels que l'acide acétique, l'acide propionique, l'acide lactique, l'acide valérique, l'acide caproïque, l'acide caprique, l'acide la urique, l'acide tridécylique, l'acide myristique, l'acide palmitique, l'acide stéarique, l'acide pivalique et l'acide isobutyrique ; les acides alicycliques, tels que l'acide cyclohexanecarboxylique ; les acides aromatiques monocarboxyliques tels que l'acide toluïque, l'acide α-naphthalènecarboxylique, l'acide β-naphthalènecarboxylique, l'acide méthylnaphthalène carboxylique, l'acide phénylacétique ; et leurs mélanges. Les composés préférés sont les acides aliphatiques, et notamment l'acide acétique, l'acide propionïque, l'acide lactique, l'acide valérique, l'acide caproïque, l'acide caprique, l'acide laurique, l'acide tridécylique, l'acide myristique, l'acide palmitique et l'acide stéarique.

Parmi les agents de terminaison de chaînes appropriés pour réagir avec la fonction terminale acide, peuvent être cités des monoamines, des monoalcools, des monoisocyanates. De préférence, les monoamines sont utilisées. Elles peuvent être choisies parmi des monoamines aliphatiques, telles que la méthylamine, l'éthylamine, la propylamine, la butylamine, l'héxylamine, l'octylamine, la décylamine, la laurylamine, la stéarylamine, la diméthylamine, la diéthylamine, la dipropylamine et la dibutylamine ; les amines alicycliques, telles que la cyclohexylamine et la dicyclohexylamine ; les monoamines aromatiques, telles que l'aniline, la toluidine, la diphénylamine et la naphthylamine ; et leurs mélanges.

Les composés préférés sont la butylamine, l'hexylamine, l'octylamine, la décylamine, la laurylamine, la stéarylamine, la cyclohexylamine et l'aniline.

Il est également possible de faire réagir les extrémités acide et/ou amine, respectivement avec des bases minérales comme les hydroxydes alcalins et alcalino-terreux tels que la potasse et la soude, et avec des acides minéraux comme HCl, HNOs et H₂SO₄.

Les agents de terminaison de chaîne peuvent être introduits au cours de la première et/ou de la seconde étape, dans le cas des procédés de fabrication du copolyamide X/10.T/Y à deux étapes décrits ci-dessus. Il est fait référence ici pour plus de détails au document WO 2010/015785.

Selon un mode de réalisation, la composition de l'invention comprend un seul copolyamide X/10.T/Y tel que décrit ci-dessus (et aucun autre polyamide).

Selon une variante, la composition de l'invention comprend deux ou une pluralité de copolyamides X/10.T/Y différents tels que décrits ci-dessus.

Selon une variante, la composition de l'invention comprend, outre le ou les copolyamides X/10.T/Y tels que décrits ci-dessus, un ou des polyamides supplémentaires (voir ci-dessous).

### Polyoléfines

La composition de l'invention comprend optionnellement et avantageusement de 5 à 40 %, et de préférence de 12 à 36 % en poids d'au moins une polyoléfine.

Les polyoléfines ont notamment pour fonction d'assouplir la composition et/ou de lui conférer une résistance aux chocs et/ou d'augmenter sa stabilité dimensionnelle vis-à-vis de l'eau (en raison de leur caractère hydrophobe).

Les polyoléfines utilisées peuvent être choisies parmi les polyoléfines réticulées, les polyoléfines fonctionnalisées, et leurs mélanges, et éventuellement d'autres polyoléfines. Avantageusement, des polyoléfines fonctionnalisées sont présentes dans la composition.

Une polyoléfine réticulée peut se présenter comme une phase dispersée dans la matrice formée par le(s) polyamide(s).

Cette polyoléfine réticulée provient de la réaction de deux ou d'au moins deux produits ayant des groupes réactifs entre eux.

Plus particulièrement, la polyoléfine réticulée est obtenue à partir d'au moins un produit (A) comprenant un époxyde insaturé et d'au moins un produit (B) comprenant un anhydride d'acide carboxylique insaturé.

Le produit (A) est avantageusement un polymère comprenant un époxyde insaturé, cet époxyde insaturé étant introduit dans ledit polymère, soit par greffage, soit par copolymérisation.

L'époxyde insaturé peut notamment être choisi parmi les époxydes suivants :
- les esters et éthers de glycidyle aliphatiques tels que l'allylglycidyléther, le vinylglycidyléther, le maléate et l'itaconate de glycidyle, l'acrylate et le méthacrylate de glycidyle, et
- les esters et éthers de glycidyle alicycliques tels que le 2-cyclohexène-1-glycidyléther, le cyclohexène-4,5-diglycidyl carboxylate, le cyclohexène-4-glycidyl carboxylate, 5-norbornène-2-méthyl-2-glycidyl carboxylate et endo-cis-bicyclo(2,2,1)-5-heptène-2,3-diglycidyl dicarboxylate.

Selon une première forme, le produit (A) est une polyoléfine greffée par un époxyde insaturé. On entend par polyoléfine un homopolymère ou copolymère comprenant un ou plusieurs motifs oléfines tels que des motifs éthylène, propylène, butène-1 ou toute autre alpha-oléfine. A titre d'exemple de polyoléfine, on peut citer :
- le polyéthylène et, notamment, le polyéthylène basse densité (LDPE), le polyéthylène haute densité (HDPE), le polyéthylène à basse densité linéaire (LLDPE) et le polyéthylène très basse densité (VLDPE) ; le polypropylène ; les copolymères éthylène/propylène ; les polyoléfines élastomères comme l'éthylène-propylène (EPR ou EPM) ou l'éthylène-propylène-diène monomère (EPDM) ; ou encore les polyéthylènes métallocènes obtenus par catalyse monosite ;
- les copolymères blocs styrène/éthylène-butène/styrène (SEBS) ; les copolymères blocs styrène/butadiène/styrène (SBS) ; les copolymères blocs styrène/isoprène/styrène (SIS) ; ou encore les copolymères blocs styrène/éthylène-propylène/styrène ;
- les copolymères de l'éthylène et d'au moins un produit choisi parmi les sels d'acides carboxyliques insaturés, les esters d'acides carboxyliques insaturés et les esters vinyliques d'acides carboxyliques saturés. La polyoléfine peut notamment être un copolymère d'éthylène et de (méth)acrylate d'alkyle ou un copolymère d'éthylène et d'acétate de vinyle.

Selon une deuxième forme, le produit (A) est un copolymère d'alpha-oléfine et d'un époxyde insaturé et, avantageusement, un copolymère de l'éthylène et d'un époxyde insaturé. Avantageusement, la quantité d'époxyde insaturé peut représenter jusqu'à 15 % en poids du copolymère (A), la quantité d'éthylène représentant quant à elle au moins 50 % en poids du copolymère (A).

On peut plus particulièrement citer les copolymères de l'éthylène, d'un ester vinylique d'acide carboxylique saturé et d'un époxyde insaturé ainsi que les copolymères de l'éthylène, d'un (méth)acrylate d'alkyle et d'un époxyde insaturé. De préférence, l'alkyle du (méth)acrylate comprend de 2 à 10 atomes de carbone. Des exemples d'acrylates ou méthacrylates d'alkyle utilisables sont notamment l'acrylate de méthyle, le méthacrylate de méthyle, l'acrylate d'éthyle, l'acrylate de n-butyle, l'acrylate d'isobutyle et l'acrylate de 2-éthylhexyle.

Selon une version avantageuse de l'invention, le produit (A) est un copolymère d'éthylène, d'acrylate de méthyle et de méthacrylate de glycidyle ou un copolymère d'éthylène, d'acrylate de n-butyle et de méthacrylate de glycidyle. On pourra notamment utiliser le produit commercialisé par la société Arkema sous la dénomination LOTADER^{®} AX8900.

Selon une autre forme de l'invention, le produit (A) est un produit ayant deux fonctions époxyde, tel que par exemple le diglycidyléther du bisphénol A (DGEBA).

Le produit (B) est avantageusement un polymère comprenant un anhydride d'acide carboxylique insaturé, cet anhydride d'acide carboxylique insaturé étant introduit dans ledit polymère, soit par greffage, soit par copolymérisation.

Des exemples d'anhydrides d'acide dicarboxylique insaturé utilisables comme constituants du produit (B) sont notamment l'anhydride maléique, l'anhydride itaconique, l'anhydride citraconique et l'anhydride tétrahydrophtalique.

Selon une première forme, le produit (B) est une polyoléfine greffée par un anhydride d'acide carboxylique insaturé. Comme on l'a vu ci-dessus, une polyoléfine est un homopolymère ou copolymère comprenant un ou plusieurs motifs oléfines tels que des motifs éthylène, propylène, butène-1 ou toute autre alpha-oléfine. Cette polyoléfine peut être notamment choisie parmi les exemples de polyoléfines listés plus haut pour le produit (A), lorsque ce dernier est une polyoléfine greffée par un époxyde insaturé.

Selon une deuxième forme, le produit (B) est un copolymère d'alpha-oléfine et d'un anhydride d'acide carboxylique insaturé et, avantageusement, un copolymère de l'éthylène et d'un anhydride d'acide carboxylique insaturé. Avantageusement, la quantité d'anhydride d'acide carboxylique insaturé peut représenter jusqu'à 15 % en poids du copolymère (B), la quantité d'éthylène représentant quant à elle au moins 50 % en poids du copolymère (B).

On peut plus particulièrement citer les copolymères de l'éthylène, d'un ester vinylique d'acide carboxylique saturé et d'un anhydride d'acide carboxylique insaturé ainsi que les copolymères de l'éthylène, d'un (méth)acrylate d'alkyle et d'un anhydride d'acide carboxylique insaturé. De préférence, l'alkyle du (méth)acrylate comprend de 2 à 10 atomes de carbone. L'acrylate ou le méthacrylate d'alkyle peut être choisi parmi ceux cités plus haut pour le produit (A).

Selon une version avantageuse de l'invention, le produit (B) est un copolymère de l'éthylène, d'un (méth)acrylate d'alkyle et d'un anhydride carboxylique insaturé. Préférentiellement, le produit (B) est un copolymère d'éthylène, d'acrylate d'éthyle et d'anhydride maléique ou un copolymère d'éthylène, d'acrylate de butyle et d'anhydride maléique. On pourra notamment utiliser les produits commercialisés par la société Arkema sous les dénominations LOTADER^{®} 4700 et LOTADER^{®} 3410.

On ne sortirait pas du cadre de l'invention si une partie de l'anhydride maléique du produit (B), selon les première et deuxième formes qui viennent d'être décrites, était en partie hydrolysée.

Selon un mode de réalisation particulier de l'invention, les teneurs pondérales en produit (A) et en produit (B), que l'on note respectivement [A] et [B], peuvent être telles que le rapport [B] / [A] est compris entre 3 et 14 et, avantageusement, entre 4 et 9.

Dans la composition selon l'invention, la polyoléfine réticulée peut également être obtenue à partir des produits (A), (B) tels que décrits ci-dessus et d'au moins un produit (C), ce produit (C) comprenant un acide carboxylique insaturé ou un acide alpha-oméga-aminocarboxylique.

Le produit (C) est avantageusement un polymère comprenant un acide carboxylique insaturé ou un acide alpha-oméga-aminocarboxylique, l'un ou l'autre de ces acides étant introduit dans ledit polymère par copolymérisation.

Des exemples d'acides carboxyliques insaturés utilisables comme constituants du produit (C) sont notamment l'acide acrylique, l'acide méthacrylique, les anhydrides d'acide carboxylique cités plus haut comme constituants du produit (B), ces anhydrides étant totalement hydrolysés.

Des exemples d'acides alpha-oméga-aminocarboxyliques utilisables comme constituants du produit (C) sont notamment l'acide 6-aminohexanoïque, l'acide 11-aminoundécanoïque et l'acide 12-aminododécanoïque.

Le produit (C) peut être un copolymère d'alpha-oléfine et d'un acide carboxylique insaturé et, avantageusement, un copolymère de l'éthylène et d'un acide carboxylique insaturé. On peut notamment citer les copolymères totalement hydrolysés du produit (B).

Selon une version avantageuse de l'invention, le produit (C) est un copolymère de l'éthylène et de l'acide (méth)acrylique ou un copolymère de l'éthylène, d'un (méth)acrylate d'alkyle et de l'acide (méth)acrylique. La quantité d'acide (méth)acrylique peut représenter jusqu'à 10 % en poids et, de préférence, de 0,5 à 5 % en poids du copolymère (C). La quantité de (méth)acrylate d'alkyle est généralement comprise entre 5 et 40 % en poids du copolymère (C).

Préférentiellement, le produit (C) est un copolymère d'éthylène, d'acrylate de butyle et d'acide acrylique. On pourra notamment utiliser le produit commercialisé par la société BASF sous la dénomination LUCALENE^{®} 3110.

Selon un mode de réalisation particulier de l'invention, les teneurs pondérales en produit (A), en produit (B), en produit (C) que l'on note respectivement [A], [B] et [C] peuvent être telles que le rapport [B] / ([A]+[C]) est compris entre 1,5 et 8, les teneurs pondérales en produits (A) et (B) étant telles que [C] ≤ [A].

De manière avantageuse, le rapport [B] / ([A]+[C]) peut être compris entre 2 et 7.

La phase dispersée de polyoléfine réticulée peut bien entendu provenir de la réaction d'un ou plusieurs produits (A) avec un ou plusieurs produits (B) et, le cas échéant, avec un ou plusieurs produits (C).

On peut utiliser des catalyseurs permettant d'accélérer la réaction entre les fonctions réactives des produits (A) et (B). On peut notamment se reporter à l'enseignement du document WO 2011/015790 pour ce qui concerne des exemples de catalyseurs, ceux-ci pouvant être utilisés dans une teneur pondérale comprise entre 0,1 et 3 % et, avantageusement, entre 0,5 et 1 % du poids total des produits (A), (B) et, le cas échéant, (C).

De préférence, lorsque la polyoléfine est une polyoléfine réticulée, alors elle est présente dans la composition en une teneur comprise entre 13 et 40 % en poids par rapport au poids total de la composition.

La composition de l'invention peut comprendre, en outre, au moins une polyoléfine fonctionnalisée (D).

Selon l'invention, on entend par polyoléfine fonctionnalisée (D) les polymères suivants.

La polyoléfine fonctionnalisée (D) peut être un polymère d'alpha-oléfine ayant des motifs réactifs : les fonctionnalités. De tels motifs réactifs sont les fonctions acides carboxyliques, anhydrides, ou époxy.

A titre d'exemple, on peut citer comme polyoléfines les homopolymères ou copolymères d'alpha oléfines ou de dioléfines, telles que par exemple, éthylène, propylène, butène-1, octène-1, butadiène, et plus particulièrement :
- les homopolymères et copolymères de l'éthylène, en particulier LDPE, HDPE, LLDPE (polyéthylène basse densité linéaire), VLDPE (polyéthylène très basse densité) et le polyéthylène métallocène,
- les homopolymères ou copolymères du propylène,
- les copolymères éthylène/alpha-oléfine tels qu'éthylène/propylène, les EPR (caoutchouc éthylène-propylène) et les EPDM (terpolymère à base d'éthylène/propylène/diène),
- les copolymères blocs styrène/éthylène-butène/styrène (SEBS), styrène/butadiène/styrène (SBS), styrène/isoprène/styrène (SIS), styrène/éthylène-propylène/styrène (SEPS),
- les copolymères de l'éthylène avec au moins un produit choisi parmi les sels ou les esters d'acides carboxyliques insaturés tel que le (méth)acrylate d'alkyle (par exemple acrylate de méthyle), ou les esters vinyliques d'acides carboxyliques saturés tel que l'acétate de vinyle (EVA), la proportion de comonomère pouvant atteindre 40 % en poids.

Ces polyoléfines décrites ci-dessus peuvent être greffées, co-polymérisées ou ter-polymérisées par des motifs réactifs (les fonctionnalités), tels que les fonctions acides carboxyliques, anhydrides, ou époxy.

Plus particulièrement, ces polyoléfines sont greffées ou co- ou ter-polymérisées par des époxydes insaturés tels que le (méth)acrylate de glycidyle, ou par des acides carboxyliques ou les sels ou esters correspondants tels que l'acide (méth)acrylique (celui-ci pouvant être neutralisé totalement ou partiellement par des métaux tels que Zn, etc.) ou encore par des anhydrides d'acides carboxyliques tels que l'anhydride maléique.

La polyoléfine fonctionnalisée (D) peut être choisie parmi les (co)polymères suivants, greffés avec anhydride maléique ou méthacrylate de glycidyle, dans lesquels le taux de greffage est par exemple de 0,01 à 5 % en poids :
- du PE (polyéthylène), du PP (polypropylène), des copolymères de l'éthylène avec propylène, butène, hexène, ou octène contenant par exemple de 35 à 80 % en poids d'éthylène ;
- les copolymères éthylène/alpha-oléfine tels qu'éthylène/ propylène, les EPR et EPDM,
- les copolymères blocs SEBS, SBS, SIS, SEPS,
- des copolymères EVA, contenant jusqu'à 40 % en poids d'acétate de vinyle,
- des copolymères éthylène et (méth)acrylate d'alkyle, contenant jusqu'à 40 % en poids de (méth)acrylate d'alkyle,
- des copolymères éthylène et EVA et (méth)acrylate d'alkyle, contenant jusqu'à 40 % en poids de comonomères.

Une polyoléfine fonctionnalisée est par exemple un mélange PE/EPR, dont le ratio en poids peut varier dans de larges mesures, par exemple entre 40/60 et 90/10, ledit mélange étant co-greffé avec un anhydride, notamment anhydride maléique, selon un taux de greffage par exemple de 0,01 à 5 % en poids.

La polyoléfine fonctionnalisée (D) peut être aussi choisie parmi les copolymères éthylène/propylène majoritaires en propylène greffés par de l'anhydride maléique puis condensés avec du polyamide (ou un oligomère de polyamide) mono aminé (produits décrits dans EP-A-0342066).

La polyoléfine fonctionnalisée (D) peut aussi être un co- ou terpolymère d'au moins un des motifs suivants :
(1) éthylène,
(2) (méth)acrylate d'alkyle ou ester vinylique d'acide carboxylique saturé et
(3) anhydride tel que anhydride maléique ou acide (méth)acrylique ou époxy tel que (méth)acrylate de glycidyle.

A titre d'exemple de polyoléfines fonctionnalisées de ce dernier type, on peut citer les copolymères suivants, où l'éthylène représente de préférence au moins 60 % en poids et où le termonomère représente par exemple de 0,1 à 12 % en poids du copolymère :
- les copolymères éthylène/(méth)acrylate d'alkyle/acide (méth)acrylique ou anhydride maléique ou méthacrylate de glycidyle;
- les copolymères éthylène/acétate de vinyle/anhydride maléique ou méthacrylate de glycidyle ;
- les copolymères éthylène/acétate de vinyle ou (méth)acrylate d'alkyle/acide (méth)acrylique ou anhydride maléique ou méthacrylate de glycidyle.

Dans les copolymères qui précèdent, l'acide (méth)acrylique peut être salifié par des sels de Zn ou Li.

Le terme *« (méth)acrylate d'alkyle* » dans (D) désigne les méthacrylates et les acrylates d'alkyle en C₁ à C₈ ; le (méth)acrylate d'alkyle peut être choisi parmi l'acrylate de méthyle, l'acrylate d'éthyle, l'acrylate de n-butyle, l'acrylate d'iso butyle, l'acrylate d'éthyl-2-hexyle, l'acrylate de cyclohexyle, le méthacrylate de méthyle et le méthacrylate d'éthyle.

Par ailleurs, les polyoléfines précitées (D) peuvent aussi être réticulées par tout procédé ou agent approprié (diépoxy, diacide, peroxyde, etc.) ; le terme polyoléfine fonctionnalisée comprend aussi les mélanges des polyoléfines précitées avec un réactif difonctionnel tel que diacide, dianhydride, diépoxy, etc. susceptible de réagir avec celles-ci, ou les mélanges d'au moins deux polyoléfines fonctionnalisées pouvant réagir entre elles.

Les copolymères mentionnés ci-dessus (D) peuvent être copolymérisés de façon statistique ou séquencée et présenter une structure linéaire ou ramifiée.

Le poids moléculaire, l'indice MFI, la densité de ces polyoléfines peuvent aussi varier dans une large mesure, ce que l'homme de l'art appréciera. L'indice MFI est l'indice de fluidité à l'état fondu. On le mesure selon la norme ASTM 1238.

Avantageusement, les polyoléfines fonctionnalisées (D) sont choisies parmi tout polymère comprenant des motifs alpha oléfiniques et des motifs porteurs de fonctions réactives polaires comme les fonctions époxy, acide carboxylique ou anhydride d'acide carboxylique. A titre d'exemples de tels polymères, on peut citer les terpolymères de l'éthylène, d'acrylate d'alkyle et d'anhydride maléique ou de méthacrylate de glycidyle comme les Lotader^{®} de la Demanderesse ou des polyoléfines greffées par de l'anhydride maléique comme les Orevac^{®} de la Demanderesse ainsi que des terpolymères de l'éthylène, d'acrylate d'alkyle et d'acide (méth)acrylique. On peut citer aussi les homopolymères ou copolymères du polypropylène greffés par un anhydride d'acide carboxylique puis condensés avec des polyamides ou des oligomères mono-aminés de polyamide, comme décrit dans la demande EP 0342066.

Plus particulièrement, les polyoléfines fonctionnalisées (D) sont :
- les terpolymères d'éthylène, d'acrylate d'alkyle et d'anhydride maléique ;
- les terpolymères d'éthylène, d'acrylate d'alkyle et de méthacrylate de glycidyle ;
- les polypropylène et polyéthylènes greffés par l'anhydride maléique ;
- les copolymères d'éthylène et de propylène et éventuellement de diène monomère greffés par l'anhydride maléique ;
- les copolymères d'éthylène et d'octène greffés par l'anhydride maléique ;
- et leurs mélanges.

De préférence, lorsque la polyoléfine est une polyoléfine fonctionnalisée (D), alors elle est présente en une teneur comprise entre 10 et 40 % en poids, de préférence entre 15 et 30 % en poids par rapport au poids total de la composition.

Avantageusement, la composition de l'invention peut comprendre en plus d'une polyoléfine réticulée et/ou fonctionnalisée, au moins une polyoléfine non fonctionnalisée (E).

Une polyoléfine non fonctionnalisée (E) est classiquement un homopolymère ou copolymère d'alpha oléfines ou de dioléfines, telles que par exemple, éthylène, propylène, butène-1, octène-1, butadiène. A titre d'exemple, on peut citer :
- les homopolymères et copolymères du polyéthylène, en particulier LDPE, HDPE, LLDPE (polyéthylène basse densité linéaire), VLDPE (very low density polyethylene, ou polyéthylène très basse densité) et le polyéthylène métallocène,
- les homopolymères ou copolymères du propylène,
- les copolymères éthylène/alpha-oléfine tels qu'éthylène /propylène, les EPR et EPDM,
- les copolymères blocs SEBS, SBS, SIS, SEPS,
- les copolymères de l'éthylène avec au moins un comonomère choisi parmi les sels ou les esters d'acides carboxyliques insaturés tel que le (méth)acrylate d'alkyle (par exemple acrylate de méthyle), ou les esters vinyliques d'acides carboxyliques saturés tel que l'EVA, la proportion de comonomère pouvant atteindre 40 % en poids par rapport au poids total du copolymère,
- et leurs mélanges.

Les copolymères mentionnés ci-dessus (E) peuvent être copolymérisés de façon statistique ou séquencée et présenter une structure linéaire ou ramifiée.

Avantageusement, les polyoléfines (E) non fonctionnalisées sont choisies parmi les homopolymères ou copolymères du polypropylène et tout homopolymère de l'éthylène ou copolymère de l'éthylène et d'un comonomère de type alpha oléfinique supérieur au propylène, tel que le butène, l'hexène, l'octène ou le 4-méthyl-1-pentène. On peut citer par exemple les polypropylènes, les polyéthylènes de haute densité, polyéthylènes de moyenne densité, polyéthylènes basse densité linéaire, polyéthylènes basse densité, polyéthylènes de très basse densité. Ces polyéthylènes sont connus par l'homme de l'art comme étant produits selon un procédé radicalaire, selon une catalyse de type Ziegler ou, plus récemment, selon une catalyse dite métallocène. Sont également préférés les copolymères de l'éthylène et d'EVA, tels que ceux commercialisés sous la dénomination commerciale EVATANE par la Demanderesse.

Lorsque la composition de l'invention comprend une polyoléfine non fonctionnalisée, alors celle-ci est présente de préférence en une teneur comprise entre 5 et 30 % en poids, de préférence entre 10 et 20 % en poids par rapport au poids total de la composition.

### Autres additifs

La composition de l'invention comporte avantageusement un plastifiant, de préférence en une proportion massique de 1 à 10 %, de manière plus particulièrement préférée de 2 à 7 %, par rapport à la masse totale de la composition.

Avantageusement, on utilise un plastifiant qui présente une bonne stabilité thermique afin qu'il ne se forme pas de fumées lors des étapes de mélange des différents polymères et de transformation de la composition obtenue.

En particulier, ce plastifiant peut être choisi parmi :
- les dérivés du benzène sulfonamide tels que le n-butyl benzène sulfonamide (BBSA), les isomères ortho et para de l'éthyl toluène sulfonamide (ETSA), le N-cyclohexyl toluène sulfonamide et le N-(2-hydroxypropyl) benzène sulfonamide (HP-BSA),
- les esters d'acides hydroxybenzoïques tels que le para-hydroxybenzoate d'éthyl-2-hexyle (EHPB) et le para-hydroxybenzoate de décyl-2-hexyle (HDPB),
- les esters ou éthers du tétrahydrofurfurylalcool comme l'oligoéthylèneoxy-tétrahydrofurfurylalcool, et
- les esters de l'acide citrique ou de l'acide hydroxymalonique, tels que l'oligoéthylèneoxymalonate.

Un plastifiant préféré, car couramment utilisé, est le n-butyl benzène sulfonamide (BBSA).

Un autre plastifiant plus particulièrement préféré est le N-(2-hydroxy-propyl) benzène sulfonamide (HP-BSA). Ce dernier présente en effet l'avantage d'éviter la formation de dépôts au niveau de la vis et/ou de la filière d'extrusion (« *larmes de filières* »), lors d'une étape de transformation par extrusion.

On peut aussi utiliser un mélange de ces plastifiants.

La composition de l'invention comprend avantageusement au moins un stabilisant thermique.

Le stabilisant thermique peut être présent en une quantité de 0 à 4 %, notamment de 0,01 à 2 % ou de 0,1 à 0,3 % en poids par rapport au poids total de la composition.

### Il peut s'agir d'un stabilisant thermique au cuivre

Plus particulièrement, il peut s'agir d'un sel de cuivre ou d'un dérivé de sel de cuivre, par exemple d'iodure de cuivre, de bromure de cuivre, d'halogénures de cuivre, de dérivés ou de mélanges de ceux-ci. Les sels de cuivre I sont préférés. Des exemples sont l'iodure de cuivre, le bromure de cuivre, le chlorure de cuivre, le fluorure de cuivre, le thiocyanate de cuivre, le nitrate de cuivre, l'acétate de cuivre, le naphthénate de cuivre, le caprate de cuivre, le laurate de cuivre, le stéarate de cuivre, l'acétylacétonate de cuivre, l'oxyde de cuivre. L'iodure de cuivre, le bromure de cuivre, le chlorure de cuivre, le fluorure de cuivre sont préférés.

On peut également prévoir à titre de stabilisant thermique un sel d'halogénure métallique en combinaison avec LiI, NaI, Kl, MgI₂, KBr ou CaI₂. KI et KBr sont préférés.

De préférence, le stabilisant thermique au cuivre est un mélange d'iodure de potassium et d'iodure de cuivre (KI/Cul).

De préférence, le mélange d'iodure de potassium et d'iodure de cuivre utile selon la présente invention se trouve dans un rapport de 90/10 à 70/30.

Un exemple d'un tel stabilisant est le Polyadd P201 de la société Ciba.

On trouvera de plus amples détails sur les stabilisants à base de cuivre dans le brevet US 2,705,227.

Il est également possible d'utiliser les cuivres complexés comme les Bruggolen H3336, H3337, H3373 de la société Brueggemann.

De préférence, la composition de l'invention comporte de 0,10 à 0,25 % en poids de stabilisant thermique au cuivre.

D'autres stabilisants thermiques possibles sont les antioxydants phénoliques à encombrement stérique. Ces composés sont décrits en détail dans le document US 2012/0279605, aux paragraphes [0025] et [0026], auxquels il est fait expressément référence ici.

Toutefois, selon un mode de réalisation alternatif, la composition de l'invention est dépourvue de tels antioxydants phénoliques encombrés.

Une autre catégorie de stabilisants possibles sont les stabilisants UV à base d'amine à encombrement stérique (ou HALS), qui sont des dérivés de la 2,2,6,6-tétraméthylpipéridine. On peut les utiliser par exemple dans une gamme de 0 à 1 %, ou de 0,01 à 0,5 %.

La composition de l'invention peut être seulement constituée de ces quatre familles de composés, à savoir d'au moins une polyoléfine, éventuellement un plastifiant, d'au moins un stabilisant thermique (notamment au cuivre) et du copolyamide semi-aromatique.

Toutefois, la composition peut également comprendre d'autres composés en dehors de ceux qui viennent d'être cités. La composition de l'invention peut notamment comprendre en outre au moins un additif et/ou au moins un polymère supplémentaire.

Les additifs supplémentaires peuvent notamment être choisis parmi les adjuvants aidant à la transformation (ou « *processing aids* »), les charges, les stabilisants autres que celui défini ci-dessus, les colorants, les agents de démoulage, les agents d'ignifugation, les agents tensio-actifs, les azurants optiques et leurs mélanges.

Parmi les colorants, on peut citer notamment le noir de carbone. Les colorants ou pigments peuvent être présents par exemple à hauteur de 0,1 à 0,2 % en poids.

Parmi les adjuvants aidant à la transformation, on peut citer les stéarates, tels que les stéarates de calcium ou de zinc, les cires naturelles, les polymères comprenant du tétrafluoroéthylène (TFE).

La proportion pondérale en *« processing aids »* est classiquement comprise entre 0,01 et 0,3 % en poids, avantageusement entre 0,02 et 0,1 % en poids, par rapport au poids total de la composition.

Parmi les charges, on peut citer la silice, le graphite, le graphite expansé, le noir de carbone, les billes de verre, le kaolin, la magnésie, les scories, le talc, les nanocharges (nanotubes de carbone), les oxydes métalliques (oxyde de titane), les métaux, les fibres (aramides, de verre, de carbone, les fibres végétales), notamment dites fibres courtes ou longues.

En fonction de la nature des charges, la quantité de ces dernières peut représenter jusqu'à 50 % en poids, avantageusement, jusqu'à 30 % en poids, du poids total de la composition, et par exemple de 5 à 30 % ou de 20 à 30 % en poids. Les charges telles que le graphite expansé par exemple peuvent permettre d'augmenter la conductivité thermique du matériau (par exemple afin de promouvoir un échange de chaleur entre une lumière d'un tube comportant une couche de composition de l'invention et l'extérieur, ou entre deux lumières d'un tube comportant une couche de composition de l'invention).

L'utilisation de fibres, notamment courtes, par exemple de fibres de verre, dans une quantité de 10 à 60 % en poids, de préférence de 20 à 40 % en poids, peut permettre de renforcer la couche formée à partir de la composition en question (la présence de fibres peut par exemple être utile à une extrémité de l'élément de circuit selon l'invention, à proximité d'une connexion à une autre pièce). Les fibres peuvent par exemple avoir une longueur de 0,05 à 1 mm, et notamment de 0,1 à 0,5 mm. Leur diamètre moyen peut être de 5 à 20 µm, de préférence de 6 à 14 µm.

La composition de l'invention peut en outre comprendre un ou plusieurs polymères supplémentaires, et notamment au moins un troisième polymère, un tel polymère étant distinct du (des) copolyamide(s) semi-aromatique(s) et de la (ou des) polyoléfine(s) mentionnés ci-avant. Alternativement, la composition de l'invention peut être dépourvue d'un tel polymère supplémentaire.

Le polymère supplémentaire peut notamment être choisi parmi un polyamide autre que celui défini précédemment, un polyamide-bloc-éther, un polyétheramide, un polyesteramide, un polysulfure de phénylène (PPS), un polyphénylène oxyde (PPO), un polymère fluoré, et leurs mélanges.

De préférence, le polymère supplémentaire est choisi parmi les polyamides aliphatiques et les polyamides-bloc-éthers. Parmi les polyamides aliphatiques, on peut notamment citer les polyamides à longue chaîne tels que les PA 11, PA 12, PA 6.10, PA 6.12, PA 6.14, PA 10.10, PA 10.12 et PA 12.12.

La composition peut ainsi contenir jusqu'à 20 % en poids, par rapport au poids total de la composition, d'au moins un polymère supplémentaire.

A titre d'exemple de composition de l'invention, on peut utiliser la composition n°1 présentant la formulation massique suivante :
- polyamide PA 11/10.T (0,7 mole d'acide 11-aminocarboxylique par mole de 1,10-décanediamine et d'acide téréphtalique) : 55,8 % ;
- copolymère éthylène / acrylate d'éthyle / anhydride maléique (ratio massique 69/30/1) : 30 % ;
- copolymère éthylène / acrylate de méthyle / méthacrylate de glycidyle (ratio 68/24/8) : 6 % ;
- HP-BSA: 7 % ;
- stabilisant thermique composé de 80 % de Kl, 10 % de Cul et 10 % de stéarate de calcium : 0,7 % ;
- antioxydant 4,4'-bis-(alpha,alpha-diméthylbenzyl)diphénylamine : 0,5 %.

A titre d'exemple de composition de l'invention, on peut également utiliser la composition n°2 présentant la formulation massique suivante :
- polyamide PA 11/10.T (0,5 mole d'acide 11-aminocarboxylique par mole de 1,10-décanediamine et d'acide téréphtalique): 68,25 % ;
- copolymère éthylène / acrylate d'éthyle / anhydride maléique (ratio massique 69/30/1) : 24 % ;
- copolymère éthylène / acrylate de méthyle / méthacrylate de glycidyle (ratio 68/24/8) : 4 % ;
- copolymère éthylène / acrylate de butyle / acide acrylique (ratio 88/8/4) : 2 % ;
- stabilisant thermique composé de 80 % de KI, 10 % de Cul et 10 % de stéarate de calcium : 0,25 % ;
- antioxydant 4,4'-bis-(alpha,alpha-diméthylbenzyl)diphénylamine : 0,5 % ;
- additifs divers : 1 % (dont du noir de carbone).

A titre d'exemple de composition de l'invention, on peut également utiliser la composition n°3 présentant la formulation massique suivante :
- polyamide PA 11/10.T (0,7 mole d'acide 11-aminocarboxylique par mole de 1,10-décanediamine et d'acide téréphtalique) : 68,25 % ;
- copolymère éthylène / acrylate d'éthyle / anhydride maléique (ratio massique 69/30/1) : 15 % ;
- copolymère éthylène / acrylate de méthyle / méthacrylate de glycidyle (ratio 68/24/8) : 7,5 % ;
- copolymère éthylène / acrylate de butyle / acide acrylique (ratio 88/8/4) : 7,5 % ;
- stabilisant : 0,7 % ;
- additifs divers : 1,05 % (dont du noir de carbone).

A titre d'exemple de composition de l'invention, on peut également utiliser la composition n°4 présentant la formulation massique suivante :
- polyamide PA 11/10.T (0,7 mole d'acide 11-aminocarboxylique par mole de 1,10-décanediamine et d'acide téréphtalique) : 85,9 % ;
- copolymère éthylène / acrylate d'éthyle / anhydride maléique (ratio massique 69/30/1) : 6 % ;
- copolymère éthylène / acrylate de méthyle / méthacrylate de glycidyle (ratio 68/24/8) : 3 % ;
- copolymère éthylène / acrylate de butyle / acide acrylique (ratio 88/8/4) : 3 % ;
- stabilisant thermique composé de 80 % de KI, 10 % de Cul et 10 % de stéarate de calcium : 0,7 % ;
- antioxydant 4,4'-bis-(alpha,alpha-diméthylbenzyl)diphénylamine : 0,5 % ;
- noir de carbone : 0,9 %.

### Elément de circuit de compression de vapeur

La composition de l'invention décrite ci-dessus est utilisée en tant que couche dans un élément de circuit de compression de vapeur.

Un circuit de compression de vapeur comprend au moins un évaporateur, un compresseur, un condenseur et un détendeur, ainsi que des lignes de transport de fluide de transfert de chaleur entre ces éléments. L'évaporateur et le condenseur comprennent un échangeur de chaleur permettant un échange de chaleur entre un fluide de transfert de chaleur, circulant dans le circuit, et un autre fluide ou corps.

L'installation peut comprendre une turbine pour générer de l'électricité (cycle de Rankine).

Le circuit de compression de vapeur peut être intégré dans une installation qui peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, *via* un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération (avec des installations mobiles par exemple dans les containers, ou stationnaires) et de congélation ou de cryogénie.

Dans le cas d'un procédé de chauffage, de la chaleur est cédée (directement ou indirectement, *via* un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « *pompe à chaleur ».*

Par « *élément de circuit de compression de vapeur »* on entend selon la présente invention toute pièce d'un tel circuit, comportant une lumière, ladite pièce étant adaptée à contenir ou transporter le fluide de transfert de chaleur.

L'élément de circuit de compression de vapeur qui fait l'objet de la présente invention est de préférence une conduite ou tubulure (ou encore une durit). Alternativement, il peut s'agir d'un raccord ou connecteur entre tubulures, ou entre tubulure et compresseur, ou condenseur, ou échangeur de chaleur, ou encore une partie d'une capacité tampon ou d'un échangeur thermique. Le terme « lumière » désigne l'intérieur de ladite pièce dudit circuit, en particulier l'intérieur de la conduite ou de la tubulure ou l'intérieur du raccord ou connecteur.

L'élément de circuit de compression de vapeur peut également être un échangeur de chaleur en tant que tel (auquel cas il comporte au moins deux lumières pour la circulation de deux fluides identiques ou différents, l'un devant céder de la chaleur à l'autre).

Le fluide de transfert de chaleur peut être contenu ou transporté sous forme gazeuse, liquide ou diphasique dans l'élément de circuit ci-dessus.

La couche de composition selon l'invention décrite ci-dessus peut être notamment une monocouche, ou être une couche interne (destinée à venir en contact du fluide de transfert de chaleur) ou une couche externe (destinée à être au contact de l'environnement) de l'élément de circuit. Il est préféré que cette couche constitue une couche (ou revêtement) interne.

### Tube multicouche

Selon un mode de réalisation particulier, l'élément de circuit de compression de vapeur selon l'invention est un tube multicouche flexible, notamment destiné à une installation de climatisation automobile. Ce tube peut par exemple être destiné à être connecté à chaque extrémité à des tubulures métalliques.

De préférence, et en faisant référence à la Fig.1, le tube multicouche flexible 10 comporte une couche interne 11 constituée par la composition de l'invention décrite ci-dessus, au-dessus de laquelle sont disposées successivement : optionnellement une première couche intermédiaire 12, constituée d'une première composition comprenant un matériau élastomère ; optionnellement une deuxième couche intermédiaire 13 constituée par un textile de renfort ; et une couche externe 14 constituée d'une deuxième composition comprenant un matériau élastomère.

### Un tel tube peut être un tube « veneer ».

La première couche intermédiaire et / ou la deuxième couche intermédiaire peuvent être omise lors que la couche externe en élastomère est suffisamment épaisse et/ou lorsque des charges et/ou fibres de renfort sont incluses dans celle-ci.

On peut également prévoir une architecture dans laquelle le tube présente une couche supplémentaire en matériau élastomère, en contact avec la couche interne (vers la lumière du tube).

Un tel tube peut être un tube dit barrière.

Les compositions comprenant un matériau élastomère peuvent être identiques ou différentes. Le matériau élastomère peut comprendre un polymère choisi parmi les polyisoprènes, les polybutadiènes, les copolymères de butadiène et d'acrylonitrile, les caoutchoucs acryliques (AEM), les caoutchoucs épichlorhydrines, les copolymères de styrène et de butadiène, les caoutchoucs butyliques, les caoutchoucs butyliques chlorés (CI-IIR), les caoutchoucs butyliques bromés (Br-IIR), les caoutchoucs chloroprènes (CR), les caoutchoucs nitriles, les caoutchoucs nitrile-butadiène (NBR), les caoutchoucs polyéthylènes chlorosulfonés (CSM) les copolymères éthylène propylène, les EPDM (éthylène-propylène-diène monomères), les terpolymères éthylène propylène 1,4-hexadiène, les terpolymères éthylène propylène dicyclopentadiène, les isobutylène-co-para-méthylstyrènes bromés (BIMS) et les combinaisons de ceux-ci. On peut utiliser un thermoplastique élastomère ou un thermoplastique vulcanisé.

Les caoutchoucs éthylène propylène et EPDM sont préférés.

Le textile de renfort peut être formé par tressage, tricotage, spiralage, ou tricotage hélicoïdal de fibres. Les fibres peuvent être par exemple des fibres de verre, de coton, d'acier, de polyester ou d'aramide, ou des combinaisons de celles-ci. Il assure une tenue en pression en association avec les couches de matériau élastomère.

De préférence, la couche interne (composition de l'invention) présente une épaisseur de 25 à 250 µm, et de manière plus particulièrement préférée de 50 à 150 µm.

L'épaisseur des autres couches est adaptée en fonction des pressions utilisées. On peut par exemple prévoir que l'ensemble des couches en matériau élastomère présente une épaisseur totale de 1 à 10 mm. L'épaisseur de la deuxième couche intermédiaire en textile de renfort est généralement inférieure à 1 mm.

### Fabrication de la composition de l'invention ainsi que des éléments de circuit de l'invention

La composition de l'invention peut être préparée par toute méthode qui rend possible l'obtention d'un mélange homogène telle que l'extrusion à l'état fondu, le compactage ou encore le malaxage à rouleaux.

Plus particulièrement, la composition de l'invention peut être préparée par mélange à l'état fondu du(des) polyamide(s) semi-aromatique(s), du(des) plastifiant(s) et des produits (A), (B) et éventuellement (C) permettant d'obtenir la (ou les) polyoléfine(s) réticulée(s).

Les éventuels additifs et/ou polymères supplémentaires peuvent, quant-à-eux, être introduits, soit en même temps que les polyamide(s) semi-aromatique(s), plastifiant(s) et produits (A), (B) et, le cas échéant, (C), soit lors d'une étape ultérieure.

Avantageusement, la composition peut être obtenue sous forme de granulés par compoundage, notamment au moyen d'une extrudeuse bi-vis, d'un co-malaxeur ou d'un mélangeur interne.

Ces granulés de la composition de l'invention, obtenue par le procédé de préparation décrit ci-dessus peuvent être ensuite transformés à l'aide d'outils connus de l'homme de l'art (tels qu'une presse à injecter ou une extrudeuse), notamment sous forme de tubes, de films et/ou d'objets moulés.

On peut aussi utiliser une extrudeuse bi-vis alimentant, sans granulation intermédiaire, une presse à injecter ou une extrudeuse, notamment pour la réalisation de tubes, de films et/ou d'objets moulés.

Les articles ou objets selon l'invention peuvent être obtenus à partir de la composition ci-dessus par un procédé de transformation connu tel que l'injection, l'extrusion, l'extrusion-soufflage, la co-extrusion ou la multi-injection.

Concernant la fabrication des tubes multicouches décrits à la section précédente, on peut utiliser le procédé suivant :
- La couche interne (composition de l'invention) peut être extrudée sur un mandrin flexible ou fixe.
- La première couche intermédiaire (en matériau élastomère) est ensuite appliquée.
- La deuxième couche intermédiaire (textile de renfort) est ensuite appliquée.
- Puis, la couche externe (en matériau élastomère) est appliquée.

On procède ensuite éventuellement à la vulcanisation pour durcir les couches élastomères.
- Il n'est généralement pas nécessaire d'utiliser un adhésif entre les couches, la cohésion de l'ensemble étant assurée par collage par fusion.

Les tubes ainsi obtenus peuvent être découpés avant ou après durcissement. S'ils sont découpés avant durcissement, les morceaux de tubes peuvent être disposés sur des mandrins courts (et par exemple courbes) avant durcissement, afin de réaliser une certaine configuration ou forme finale pour ces morceaux de tubes.

### Fluide de transfert de chaleur

Par « *composé de transfert de chaleur* », respectivement « *fluide de transfert de chaleur»* (ou fluide frigorigène, ou réfrigérant), on entend un composé, respectivement un fluide, susceptible d'absorber de la chaleur en s'évaporant à basse température et basse pression et de fournir de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

En outre, le fluide de transfert de chaleur peut éventuellement comprendre un ou plusieurs additifs qui ne sont pas des composés de transfert de chaleur pour l'application envisagée.

Les composés de transfert de chaleur peuvent être des composés hydrocarbures, éthers, hydrofluoroéthers, hydrofluorocarbures ou fluorooléfines ou HFO. Les hydrofluorocarbures et les fluorooléfines sont préférés, et plus particulièrement les fluorooléfines. Les fluoropropènes, les fluoropropanes et les fluoroéthanes sont préférés.

Des exemples de composés de transfert de chaleur préférés, utilisés individuellement ou en mélange, sont le 1,3,3,3-tétrafluoropropène (R-1234ze), le 2,3,3,3-tétrafluoropropène (R-1234yf), le 1,2,3,3,3-pentafluoropropène (R-1225ye), le 1,1,3,3-tétrafluoropropène (R-1234zc), le 3,3,3-trifluoropropène (R-1243zf), le 2,3,3-trifluoropropène (R-1243yf), le 1,1,1,2-tétrafluoroéthane (R-134a), le 1,1,2,2-tétrafluoroéthane (R-134), le pentafluoroéthane (R-125), le difluorométhane (R-32), le 1,1-difluoroéthane (R-152a), le 1,1,1,2,3,3,3-heptafluoropropane (R-227ea), le 1,1,1-trifluoropropane (R-263), le 1,1,1,3,3,3-hexafluoropropane (R-236fa), le 1,1,1,3,3-pentafluoropropane (R-245fa), le 1,1,1,3,3-pentafluorobutane (R-365mfc) et le trifluoroiodométhane.

Les composés ci-dessus peuvent également être utilisés en mélange avec de l'ammoniac ou du dioxyde de carbone.

Selon un mode de réalisation préféré, le fluide de transfert de chaleur est du R-134a, ou du R-1234yf, ce dernier étant particulièrement préféré.

Les mélanges de R-1234yf et d'ammoniac, et de R-1234yf et de dioxyde de carbone, sont également préférés, tout particulièrement pour la climatisation stationnaire.

Les additifs peuvent notamment être choisis parmi les lubrifiants, les nanoparticules, les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, les époxydes (alkyl éventuellement fluoré ou perfluoré ou alkényl ou aromatique) tels que les n-butyl glycidyl éther, hexanediol diglycidyl éther, allyl glycidyl éther, butylphénylglycidyl éther, les phosphites, les phosphonates, les thiols et les lactones.

A titre de lubrifiants on peut notamment utiliser des huiles d'origine minérale, des huiles de silicone, des paraffines d'origine naturelle, des naphtènes, des paraffines synthétiques, des alkylbenzènes, des poly-alpha oléfines, des polyalkylène glycols (PAG), des polyol esters (POE) et / ou des polyvinyléthers.

Selon l'invention, il est particulièrement préféré que le fluide de transfert de chaleur circulant dans le circuit de compression de vapeur comprenne un lubrifiant PAG ou un lubrifiant POE.

Selon un mode de réalisation particulièrement préféré de l'invention, le fluide de transfert de chaleur est du R-1234yf additionné de lubrifiant PAG (et éventuellement d'additifs supplémentaires).

Parmi les lubrifiants PAG, il est notamment possible d'utiliser ceux qui sont décrits dans le document US 2010/0282999, auquel il est expressément fait référence ici. Ces lubrifiants répondent à la formule R₁-(OR₃)ₙ-R₂, dans laquelle R₁ et R₂ sont identiques ou différents et représentent un atome d'hydrogène, un groupe alkyle en C1-C5 ou un groupe acyle en C2-C5, R₃ représente un groupe alkylène en C2-C4, et la proportion molaire de groupes alkylènes en C2 dans les motifs R₃ est au plus de 30 %. La valeur hydroxyle est de préférence au plus de 100 mgKOH/g, ou de 50, 30 ou 10 mgKOH/g. Le poids moléculaire en nombre du PAG est de préférence de 500 à 3000, ou de 600 à 2000 ou de 600 à 1500.

Parmi les lubrifiants PAG, il est également possible d'utiliser ceux qui sont décrits dans le document US 2010/0175421, auquel il est expressément fait référence ici. Ces lubrifiants répondent à la formule R₁-[(OR₂)ₘ-R₃]ₙ, dans laquelle R₁ représente un atome d'hydrogène, un groupe hydrocarboné ayant 1 à 10 atomes de carbone, un groupe acyle ayant 2 à 10 atomes de carbone, un groupe hydrocarboné ayant 2 à 6 sites de liaison et 1 à 10 atomes de carbone ou un groupe hydrocarboné contenant un atome d'oxygène ayant 1 à 10 atomes de carbone, R₂ représente un groupe alkylène ayant 2 à 4 atomes de carbone, R₃ représente un atome d'hydrogène, un groupe hydrocarboné ayant 1 à 10 atomes de carbone, un groupe acyle ayant 2 à 10 atomes de carbone, ou un groupe hydrocarboné contenant un atome d'oxygène ayant 1 à 10 atomes de carbone, n représente un entier allant de 1 à 6 et m est un nombre tel que la valeur moyenne m x n est de 6 à 80. Des exemples de tels PAG sont le polypropylène glycol diméthyléther, le copolymère de polyéthylène-polypropylène glycol diméthyléther, le copolymère de polyéthylène-polypropylène glycol méthylbutyléther et le diacétate de polypropylène glycol. La valeur hydroxyle est de préférence de 5 mgKOH/g ou moins, ou de 3 mgKOH/g ou moins, ou de 1 mgKOH/g ou moins. Le poids moléculaire en nombre du PAG est de préférence de 500 à 3000, ou de 600 à 2500.

Parmi les lubrifiants PAG, il est également possible d'utiliser ceux qui sont décrits dans le document WO 2010/075046, auquel il est expressément fait référence ici. Ces lubrifiants répondent à la formule RX(RₐO)ₓ(R_{b}O)_{y}R_{c}, dans laquelle R est choisi parmi les groupes alkyles ayant de 1 à 10 atomes de carbone, les groupes hydrocarbonés aliphatiques ayant de 2 à 6 valences, et les substituants comprenant un hétérocycle dans lequel le ou les hétéroatomes sont l'oxygène, X est choisi parmi O et S, Rₐ est un groupe alkylène en C2, R_{b} est un groupe alkylène en C3, R_{c} est identique à R ou représente H, x et y valent 0 ou un entier inférieur ou égal à 100, indépendamment. La somme x+y est un entier allant de 5 à 100. Les groupes hydrocarbonés aliphatiques comprennent notamment les alcanes, les alcènes, les alcynes, et en particulier les groupes méthyle, butyle et propyle. Le lubrifiant peut être un homopolymère d'oxypropylène, linéaire. Des terminaisons alkoxy, et notamment méthoxy sont préférées. Ces lubrifiants présentent une viscosité cinématique de préférence d'au moins 30 cSt, ou 20 cSt, ou 10 cSt à 40°C, ou un indice de viscosité d'au moins 150, ou 120 ou 100. La valeur d'acide totale est de préférence inférieure à 0,03, ou 0,02, ou 0,01 mgKOH/g.

A titre de nanoparticules on peut notamment utiliser les nanoparticules de charbon, les oxydes métalliques (cuivre, aluminium), TiO₂, Al₂O₃, MoS₂...

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les amines, les norbornènes, les dérivés de norbornènes, le cyclohexène, les composés aromatiques hétérocycliques, l'ascaridole, l'o-méthoxy(méthyl)-phénol et les combinaisons de ceux-ci.

Pour ce qui est de la climatisation automobile, il est préféré d'utiliser un seul composé de transfert de chaleur (plutôt qu'un mélange) et un seul lubrifiant (plutôt qu'un mélange), pour des questions de stabilité dans le circuit de compression de vapeur.

### EXEMPLES

Les exemples suivants illustrent l'invention sans la limiter.

### Exemple 1 - évaluation générale des propriétés des couches internes selon l'invention

Dans cet exemple, on compare diverses propriétés d'une couche constituée d'une composition comprenant un copolyamide de formule X/10.T (selon l'invention, ratio molaires de 0.5/1 à 0.7/1) avec celles de couches constituées de compositions connues, à savoir :
- une couche constituée d'une composition de PA 6 modifié choc, correspondant au produit commercialisé par DuPont sous le nom Zytel^{®} ST 811 ;
- une couche constituée d'un alliage de PA 6 avec des polyoléfines réticulées (produit commercial de marque Orgalloy^{®} LT5050 Naturel de chez Arkema) ;
- une couche constituée d'une composition de PA 6.6/6.T ;
- une couche constituée d'une composition de PA 9.T ou de PA 10.T (Genestar^{®} N1001 D).

Les résultats sont reportés dans le tableau 1 ci-dessous. Chaque couche est notée sur une échelle de 1 (plus faible performance) à 10 (performance maximale).

**Tableau 1 - Présentation des différentes propriétés**

| | PA 6.6/6.T | PA 9.T ou PA 10.T | PA.6 | Orgalloy^{®} | PA 11/10.T (invention) |
|---|---|---|---|---|---|
| Barrière aux réfrigérants fluorés | 10 | 10 | 5 | 5 | 10 |
| Stabilité dimensionnelle liée à l'eau | 3 | 7 | 1 | 3 | 7 |
| Barrière à l'eau | 7 | 10 | 5 | 7 | 10 |
| Tenue thermique et chimique (en présence d'huile et de réfrigérant R-134a) | 10 | 10 | 5 | 5 | 10 |
| Tenue thermique et chimique (en présence d'huile et de réfrigérant R-1234yf) | 5 | 5 | 3 | 3 | 5 |
| Tenue thermique à long terme | 5 | 7 | 1 | 3 | 10 |
| Flexibilité du tube obtenu | 1 | 5 | 5 | 7 | 7 |
| Adhésion de la couche à un élastomère | 3 | 3 | 7 | 7 | 5 |
| Aptitude à la mise en forme | 1 | 3 | 7 | 7 | 5 |
| Note totale | 45 | 60 | 39 | 47 | 69 |

En ce qui concerne l'évaluation de la propriété de barrière aux réfrigérants fluorés : une mesure de perméation aux réfrigérants fluorés (voir exemple 2) a permis de démontrer que la famille des polyamides et copolyamides semi-aromatiques était significativement meilleure barrière que la famille des PA6 et Orgalloy^{®}.

En ce qui concerne l'évaluation de la stabilité dimensionnelle liée à l'eau et de la barrière à l'eau : l'absorption d'eau (donc la variation dimensionnelle) et la perméation à l'eau dans les matériaux polyamides sont liées à la densité de fonctions amides. Ainsi, les polyamides de la famille PA 6 sont les plus hydrophiles, viennent ensuite le PA 6.6/6.T et l'Orgalloy^{®} qui, lui, bénéficie en comparaison du PA 6 du caractère hydrophobe des polyoléfines incorporées et, enfin, les PA 9.T, 10.T et les copolyamides semi-aromatiques de l'invention.

En ce qui concerne l'évaluation de la tenue thermique et chimique (en présence d'huile et de réfrigérant R-134a) : les données de tenue thermique (exemple 4) montrent que les polyamides ou copolyamides aromatiques ont une tenue thermique supérieure à la famille des PA 6 et Orgalloy^{®}.

Les données de perméation (exemple 2) montrent que les polyamides ou copolyamides aromatiques ont une performance barrière au R-134a supérieure à la famille des PA 6 et Orgalloy^{®}.

En ce qui concerne l'évaluation de la tenue thermique et chimique (en présence d'huile et de réfrigérant R-1234yf) : les données de tenue thermique (exemple 4) montrent que les polyamides ou copolyamides aromatiques ont une tenue thermique supérieure à la famille des PA 6 et Orgalloy^{®}.

Les données de perméation (exemple 2) montrent que les polyamides ou copolyamides aromatiques ont une performance barrière au R-1234yf supérieure à la famille des PA 6 et Orgalloy^{®}.

En ce qui concerne l'évaluation de la tenue thermique à long terme : les données de tenue thermique (exemple 4) montrent que les polyamides ou copolyamides aromatiques ont une tenue thermique supérieure à la famille des PA 6 et Orgalloy^{®}.

En ce qui concerne l'évaluation de la flexibilité du tube obtenu : les données de module en traction (exemple 4) montrent que les Orgalloy^{®} et copolyamides aromatiques de l'invention sont plus souples et donc conduisent, à iso-épaisseur, à des tubes plus flexibles.

En ce qui concerne l'évaluation de l'adhérence de la couche à un élastomère : l'adhérence sur élastomère est d'autant plus difficile que la température de fusion de la couche interne est élevée (voir exemple 4).

En ce qui concerne l'évaluation de l'aptitude à la mise en forme : plus la température de fusion sera élevée (exemple 4), plus la température de mise en oeuvre est élevée, entraînant un coût énergétique supplémentaire.

### Exemple 2 - Propriétés de perméabilité aux réfrigérants fluorés

Dans cet exemple, on compare la perméabilité aux réfrigérants fluorés (R-1234yf et R-134a) d'une couche constituée d'une composition comprenant un copolyamide de formule X/10.T (selon l'invention) avec celle de couches constituées de compositions connues, à savoir :
- une couche de PA 6 modifié choc, correspondant au produit commercialisé par DuPont sous le nom Zytel^{®} ST 811, qui constitue une référence commerciale actuelle pour la couche interne d'un « *tube veneer* » pour le transport de réfrigérant dans un circuit de climatisation automobile ;
- une couche à base de copolymère PA 6/6.6, correspondant au produit commercialisé par Arkema sous le nom Rilsan@ RDG113 ;
- une couche à base de PA 11 connu pour sa bonne résistance thermique, commercialisé par Arkema sous le nom Rilsan@ BESN Noir P126TL ;
- une couche (selon l'invention) constituée par la composition n°1 décrite ci-dessus ;
- une couche (selon l'invention) constituée par la composition n°2 décrite ci-dessus.

Les mesures de flux ont été réalisées avec une cellule de perméation, par un couplage Lyssy GPM500/GC à une température de 23°C et 0 % d'humidité relative. La face supérieure de la cellule est balayée par le gaz d'essai, et le flux diffusant à travers le film dans la partie inférieure est mesuré par chromatographie en phase gazeuse. On utilise de l'hélium en tant que gaz vecteur balayant la partie inférieure.

Les résultats sont reproduits dans les tableaux 2a et 2b ci-dessous. Les épaisseurs sont exprimées en µm (épaisseur moyenne et écart-type), les flux de réfrigérants sont exprimés en cm³.25 µm/m²/24 h/atm. La masse volumique de la phase vapeur du R-134a est de 4,24 kg/m³ et la masse volumique de la phase vapeur du R-1234yf est de 37,6 kg/m³.

**Tableau 2 a- résultats pour le R-134a**

| | Epaisseur | Flux |
|---|---|---|
| Du Pont Zytel^{®} ST 811 | 40 ± 8 | 0,02 |
| Rilsan^{®} RDG113 | 87 ± 6 | 0,04 |
| Rilsan^{®} BESN Noir P126TL | 69 ± 4 | 12 |
| Composition n°1 (invention) | 95 ± 5 | < 0,01 |

**Tableau 2b - résultats pour le R-1234yf**

| | Epaisseur | Flux |
|---|---|---|
| Du Pont Zytel^{®} ST 811 | 40 ± 8 | 0,02 |
| Rilsan^{®} BESN Noir P126TL | 69 ± 4 | 3 |
| Composition n°2 (invention) | 76 ± 7 | < 0,01 |

### Exemple 3 - Propriétés de perméabilité à la vapeur d'eau

Dans cet exemple, on compare la perméabilité à l'eau d'une couche constituée d'une composition comprenant un copolyamide semi-aromatique de formule X/10.T (selon l'invention, composition n°2) avec celle de couches constituées de compositions connues, à savoir une composition à base de PA 11 (produit Besno TL), une composition à base de PA 12 (produit Aesno TL), une composition Orgalloy^{®} (R60ES) et une composition de PA 6 stabilisé.

Les mesures sont effectuées selon la norme ASTM E96, méthode E. Les flux dans le tableau 3 sont donnés en g.25µm/24h/m².

Les résultats sont reportés dans le tableau 3 ci-dessous.

**Tableau 3 - résultats de perméation à l'eau**

| | PA 11 | PA 12 | Invention | Orgalloy^{®} | PA 6 |
|---|---|---|---|---|---|
| 23°C, 85% humidité relative | 28 | 25 | 28 | 17 | 50 |
| 85°C, 85% humidité relative | 1600 | 1600 | 950 | 1600 | 1800 |

### Exemple 4 - Propriétés physiques et mécaniques

Dans cet exemple, on compare la température de fusion typique exprimée en °C (mesurée selon la norme ISO 11357), le module en traction (à sec) typique exprimé en MPa (mesuré selon la norme ISO 527) et la résistance thermique ou température pour une demi-vie de 1000 h (mesurée en suivant les propriétés d'élongation à la rupture selon la norme ISO 527) pour un polyamide PA 6.6/6.T, un polyphtalamide PA 9.T (Genestar^{®} N1001D), un polyamide PA 6 (stabilisé), un polyamide de la gamme Orgalloy^{®} (LT 5050 Naturel), et un copolyamide selon l'invention (compositions n°1 et 2).

Les résultats sont reportés dans le tableau 4 ci-dessous.

**Tableau 4 - résultats physiques et mécaniques**

| | PA 6.6/6.T | PPA 9.T | PA 6 | Orgalloy^{®} | Invention |
|---|---|---|---|---|---|
| Température de fusion | 280-330 | 260-310 | 225 | 225 | 250-275 |
| Module en traction | 3500 | 2500 | 2500 | 700 | 500-1600 |
| Résistance thermique | 145 | 145 | 135 | 140 | 160 |

Des exemples ci-dessus, il ressort clairement que les copolyamides de formule X/10.T/Y et en particulier de formule X/10.T présentent de propriétés tout à fait satisfaisantes pour les utiliser comme couche interne dans un tube dans lequel circule un réfrigérant HFO et notamment le 1234yf en présence d'huile PAG.

## Revendications

1. Dispositif de transfert de chaleur comprenant un circuit de compression de vapeur qui comporte au moins un élément de circuit de compression de vapeur, et de préférence une pluralité de tels éléments, ledit élément de circuit de compression de vapeur, comprenant au moins une couche constituée d'une composition comprenant un copolyamide de formule X/10.T/Y, dans laquelle :
- X représente soit les restes d'un aminoacide aliphatique comprenant de 8 à 18 atomes de carbone, soit un lactame, soit le motif X₁.X₂ représentant les restes issus de la condensation d'une diamine aliphatique comprenant de 6 à 18 atomes de carbone et d'un diacide (cyclo)aliphatique comprenant de 6 à 18 atomes de carbone ;
- 10.T représente les restes de la condensation d'une décanediamine et de l'acide téréphtalique ; et
- Y représente les restes de la condensation d'une diamine aliphatique comprenant de 9 à 14 atomes de carbone et d'un diacide aromatique, Y étant différent du motif 10.T ;
la proportion molaire de motifs 10.T dans le copolyamide étant supérieure à 0 % ;
la proportion molaire de motifs Y par rapport à l'ensemble des motifs 10.T et Y étant de 0 à 30 % ; et
la proportion de motifs X étant de 0,4 à 0,8 mole pour une mole de motifs semi-aromatiques 10.T et Y,
ledit élément étant un tube multicouche, comprenant de préférence successivement :
- une couche interne qui est ladite couche constituée d'une composition comprenant un copolyamide ;
- optionnellement, une première couche intermédiaire disposée au-dessus de celle-ci, constituée d'une première composition comprenant un matériau élastomère ;
- optionnellement, une deuxième couche intermédiaire disposée au-dessus de celle-ci, constituée par un textile de renfort ;
- une couche externe disposée au-dessus de celle-ci, constituée d'une deuxième composition comprenant un matériau élastomère ; chaque composition comprenant un matériau élastomère étant de préférence une composition comprenant un caoutchouc éthylène-propylène ou un caoutchouc éthylène-propylène-diène monomère.

2. Dispositif de transfert de chaleur selon la revendication 1, dans lequel le copolyamide de formule X/10.T/Y est un copolyamide de formule X/10.T.

3. Dispositif de transfert de chaleur selon la revendication 1 ou 2, dans lequel X représente soit les restes d'un aminoacide aliphatique comprenant de 10 à 12 atomes de carbone, soit le motif X₁.X₂ représentant les restes issus de la condensation d'une diamine aliphatique comprenant de 6 à 12 atomes de carbone et d'un diacide aliphatique comprenant de 6 à 12 atomes de carbone.

4. Dispositif de transfert de chaleur selon l'une des revendications 1 ou 3, dans lequel Y représente un motif 10.I, 9.T, 12.T ou 14.T.

5. Dispositif de transfert de chaleur selon l'une des revendications 1 à 3, dans lequel le copolyamide de formule X/10.T/Y est choisi parmi les copolyamides de formules 11/10.T, 12/10.T, 6.10/10.T, 6.12/10.T, 10.6/10.T, 10.10/10.T, 10.12/10.T, 12.12/10.T et 10.14/10.T et de manière plus particulièrement préférée est un copolyamide de formule 11/10.T.

6. Dispositif de transfert de chaleur selon l'une des revendications précédentes, dans lequel la proportion de motifs X dans le copolyamide est de 0,5 à 0,7 mole pour une mole de motifs semi-aromatiques 10.T et Y.

7. Dispositif de transfert de chaleur selon l'une des revendications précédentes, dans lequel le copolyamide est présent dans la composition en une proportion massique de 30 à 99 %, de préférence de 40 à 95 %, de manière plus particulièrement préférée de 50 à 85 % ; et / ou dans lequel la composition comprend en outre :
- optionnellement, une ou plusieurs polyoléfines fonctionnalisées ou non, de préférence en une proportion massique de 5 à 40 %, de manière plus particulièrement préférée de 12 à 36 % ;
- optionnellement, un ou plusieurs plastifiants, de préférence en une proportion massique de 1 à 10 %, de manière plus particulièrement préférée de 2 à 7 % ;
- optionnellement, un ou plusieurs additifs choisis parmi les adjuvants aidant à la transformation, les charges, les stabilisants thermiques, les stabilisants UV, les agents nucléants, les colorants, les pigments, les agents de démoulage, les agents d'ignifugation, les agents tensio-actifs, les azurants optiques, les antioxydants et leurs mélanges.

8. Dispositif de transfert de chaleur selon l'une des revendications précédentes, dans lequel le circuit de compression de vapeur contient un fluide de transfert de chaleur choisi parmi les composés hydrocarbures, hydrofluorocarbures, éthers, hydrofluoroéthers ou fluorooléfines, notamment parmi les fluoropropènes, les fluoropropanes et les fluoroéthanes, et de manière plus particulièrement préférée parmi le 1,3,3,3-tétrafluoropropène, le 2,3,3,3-tétrafluoropropène, le 1,2,3,3,3-pentafluoropropène, le 1,1,3,3-tétrafluoropropène, le 3,3,3-trifluoropropène, le 2,3,3-trifluoropropène, le 1,1,1,2-tétrafluoroéthane, le 1,1,2,2-tétrafluoroéthane, le pentafluoroéthane, le difluorométhane, le 1,1-difluoroéthane, le 1,1,1,2,3,3,3-heptafluoropropane, le 1,1,1-trifluoropropane, le 1,1,1,3,3,3-hexafluoropropane, le 1,1,1,3,3-pentafluoropropane, le 1,1,1,3,3-pentafluorobutane, le trifluoroiodométhane et les mélanges comprenant ceux-ci ; et de manière tout particulièrement préférée ledit fluide de transfert de chaleur comprenant ou étant du 2,3,3,3-tétrafluoropropène.

9. Dispositif de transfert de chaleur selon la revendication 8, dans lequel le fluide de transfert de chaleur est additionné d'un lubrifiant, de préférence choisi parmi les huiles minérales, les huiles de silicone, les paraffines d'origine naturelle, les naphtènes, les paraffines synthétiques, les alkylbenzènes, les poly-alpha oléfines, les polyalkylène glycols, les polyol esters et / ou les polyvinyléthers ; le lubrifiant étant de manière plus particulièrement préférée un polyalkylène glycol ou un polyol ester.

10. Dispositif de transfert de chaleur selon l'une des revendications précédentes, dans lequel l'élément de circuit de compression de vapeur est un élément de connexion ou une conduite.

11. Dispositif de transfert de chaleur selon l'une des revendications précédentes, dans lequel ladite couche constituée d'une composition comprenant un copolyamide est disposée sur une surface interne de l'élément.

12. Dispositif de transfert de chaleur selon l'une des revendications précédentes, dans lequel l'élément de circuit de compression de vapeur est un objet extrudé.

13. Dispositif de transfert de chaleur selon l'une des revendications 1 à 12, choisi parmi les dispositifs de climatisation mobile ou stationnaire, les dispositifs de réfrigération, les dispositifs de congélation, les dispositifs de chauffage par pompe à chaleur et les cycles de Rankine ; ledit dispositif étant de préférence un dispositif de climatisation automobile.

14. Utilisation d'un élément de circuit de compression de vapeur, comprenant au moins une couche constituée d'une composition comprenant un copolyamide de formule X/10.T/Y pour le transport d'un fluide de transfert de chaleur dans un circuit de compression de vapeur, dans laquelle :
- X représente soit les restes d'un aminoacide aliphatique comprenant de 8 à 18 atomes de carbone, soit un lactame, soit le motif X₁.X₂ représentant les restes issus de la condensation d'une diamine aliphatique comprenant de 6 à 18 atomes de carbone et d'un diacide (cyclo)aliphatique comprenant de 6 à 18 atomes de carbone ;
- 10.T représente les restes de la condensation d'une décanediamine et de l'acide téréphtalique ; et
- Y représente les restes de la condensation d'une diamine aliphatique comprenant de 9 à 14 atomes de carbone et d'un diacide aromatique, Y étant différent du motif 10.T ;
la proportion molaire de motifs 10.T étant supérieure à 0 % ;
la proportion molaire de motifs Y par rapport à l'ensemble des motifs 10.T et Y étant de 0 à 30 % ; et
la proportion de motifs X étant de 0,4 à 0,8 mole pour une mole de motifs aromatiques 10.T et Y,
ledit élément étant un tube multicouche, comprenant de préférence successivement :
- une couche interne qui est ladite couche constituée d'une composition comprenant un copolyamide ;
- optionnellement, une première couche intermédiaire disposée au-dessus de celle-ci, constituée d'une première composition comprenant un matériau élastomère ;
- optionnellement, une deuxième couche intermédiaire disposée au-dessus de celle-ci, constituée par un textile de renfort ;
- une couche externe disposée au-dessus de celle-ci, constituée d'une deuxième composition comprenant un matériau élastomère ;
chaque composition comprenant un matériau élastomère étant de préférence une composition comprenant un caoutchouc éthylène-propylène ou un caoutchouc éthylène-propylène-diène monomère.

15. Utilisation selon la revendication 14, dans laquelle la composition est telle que décrite dans l'une des revendications 2 à 7.

16. Utilisation selon la revendication 14 ou 15, dans laquelle le fluide de transfert de chaleur est tel que décrit dans la revendication 8 ou 9.

17. Utilisation selon l'une des revendications 14 à 16, dans laquelle la couche constituée d'une composition comprenant un copolyamide est une couche d'un élément de circuit de compression de vapeur tel que décrit dans l'une des revendications 1 à 13.

18. Procédé de chauffage ou de refroidissement d'un fluide ou d'un corps au moyen d'un circuit de compression de vapeur contenant un fluide de transfert de chaleur, ledit procédé comprenant successivement l'évaporation du fluide de transfert de chaleur, la compression du fluide de transfert de chaleur, la condensation du fluide de chaleur et la détente du fluide de transfert de chaleur, dans lequel le circuit de compression de vapeur comprend un élément de circuit de compression de vapeur selon l'une des revendications 1 à 13.

19. Procédé selon la revendication 18, qui est un procédé de chauffage, de climatisation, de réfrigération ou de congélation, et qui de préférence est un procédé de climatisation dans un véhicule automobile.

20. Procédé selon la revendication 18 ou 19, dans lequel le fluide de transfert de chaleur est tel que décrit dans la revendication 8 ou 9.

## Patentansprüche

1. Wärmeübertragungsvorrichtung, umfassend einen Dampfkompressionskreislauf, der mindestens ein Dampfkompressionskreislaufelement und vorzugsweise eine Vielzahl solcher Elemente aufweist, das Dampfkompressionskreislaufelement umfassend mindestens eine Schicht, die aus einer Zusammensetzung besteht, umfassend ein Copolyamid von Formel X/10.T/Y, wobei:
- X entweder die Reste einer aliphatischen Aminosäure, umfassend von 8 bis 18 Kohlenstoffatome, oder ein Lactam oder die Einheit X₁.X₂ darstellt, die die Reste darstellt, die aus der Kondensation eines aliphatischen Diamins, umfassend von 6 bis 18 Kohlenstoffatome, und einer (cyclo)aliphatischen Disäure, umfassend von 6 bis 18 Kohlenstoffatome, stammen;
- 10.T die Reste der Kondensation eines Dekandiamins und der Terephthalsäure darstellt; und
- Y die Reste der Kondensation eines aliphatischen Diamins, umfassend von 9 bis 14 Kohlenstoffatome, und einer aromatischen Disäure darstellt, wobei Y von der Einheit 10.T verschieden ist;
der molare Anteil der Einheiten 10.T in dem Copolyamid größer als 0 % ist;
der molare Anteil der Einheiten Y im Vergleich zu der Gesamtheit der Einheiten 10.T und Y von 0 bis 30 % beträgt; und
der Anteil der Einheiten X von 0,4 bis 0,8 Mol pro Mol der semiaromatischen Einheiten 10.T und Y beträgt,
das Element ein mehrschichtiges Rohr ist, umfassend vorzugsweise aufeinanderfolgend:
- eine innere Schicht, die die Schicht ist, die aus einer Zusammensetzung besteht, umfassend ein Copolyamid;
- wahlweise eine erste Zwischenschicht, die über dieser angeordnet ist, die aus einer ersten Zusammensetzung besteht, umfassend ein Elastomermaterial;
- wahlweise eine zweite Zwischenschicht, die über dieser angeordnet ist, die aus einer Verstärkungstextilie besteht;
- eine äußere Schicht, die über dieser angeordnet ist, die aus einer zweiten Zusammensetzung besteht, umfassend ein Elastomermaterial;
jede Zusammensetzung umfassend ein Elastomermaterial, das vorzugsweise eine Zusammensetzung ist, umfassend ein Kautschukethylenpropylen oder ein Kautschukethylenpropylendienmonomer.

2. Wärmeübertragungsvorrichtung nach Anspruch 1, wobei das Copolyamid von Formel X/10.T/Y ein Copolyamid von Formel X/10.T ist.

3. Wärmeübertragungsvorrichtung nach Anspruch 1 oder 2, wobei X entweder die Reste einer aliphatischen Aminosäure, umfassend von 10 bis 12 Kohlenstoffatome, oder die Einheit X₁.X₂ darstellt, die die Reste darstellt, die aus der Kondensation eines aliphatischen Diamins, umfassend von 6 bis 12 Kohlenstoffatome, und einer aliphatischen Disäure, umfassend von 6 bis 12 Kohlenstoffatome, stammen.

4. Wärmeübertragungsvorrichtung nach einem der Ansprüche 1 oder 3, wobei Y eine Einheit 10.I, 9.T, 12.T oder 14.T darstellt.

5. Wärmeübertragungsvorrichtung nach einem der Ansprüche 1 bis 3, wobei das Copolyamid von Formel X/10.T/Y aus den Copolyamiden von Formeln 11/10.T, 12/10.T, 6.10/10.T, 6.12/10.T, 10.6/10.T, 10.10/10.T, 10.12/10.T, 12.12/10.T und 10.14/10.T ausgewählt ist und besonders bevorzugt ein Copolyamid von Formel 11/10.T ist.

6. Wärmeübertragungsvorrichtung nach einem der vorstehenden Ansprüche, wobei der Anteil der Einheiten X in dem Copolyamid von 0,5 bis 0,7 Mol pro Mol der semiaromatischen Einheiten 10.T und Y beträgt.

7. Wärmeübertragungsvorrichtung nach einem der vorstehenden Ansprüche, wobei das Copolyamid in der Zusammensetzung in einem Massenanteil von 30 bis 99 %, vorzugsweise von 40 bis 95 %, besonders bevorzugt von 50 bis 85 %, vorliegt; und/oder wobei die Zusammensetzung ferner umfasst:
- wahlweise ein oder mehrere funktionalisierte oder nicht funktionalisierte Polyolefine, vorzugsweise in einem Massenanteil von 5 bis 40 %, besonders bevorzugt von 12 bis 36 %;
- wahlweise einen oder mehrere Weichmacher, vorzugsweise in einem Massenanteil von 1 bis 10 %, besonders bevorzugt von 2 bis 7 %;
- wahlweise ein oder mehrere Additive, die aus Verarbeitungshilfsmitteln, Füllstoffen, thermischen Stabilisatoren, UV-Stabilisatoren, Nukleierungsmitteln, Farbstoffen, Pigmenten, Formtrennmitteln, Flammschutzmitteln, Tensiden, optischen Aufhellern, Antioxidantien und ihren Mischungen ausgewählt ist.

8. Wärmeübertragungsverfahren nach einem der vorstehenden Ansprüche, wobei der Dampfkompressionskreislauf eine Wärmeübertragungsflüssigkeit enthält, die aus Kohlenwasserstoffverbindungen, Fluorkohlenwasserstoffen, Ethern, Hydrofluorethern oder Fluorolefinen, insbesondere aus Fluorpropenen, Fluorpropanen und Fluorethanen, und besonders bevorzugt aus 1,3,3,3-Tetrafluorpropen, 2,3,3,3-Tetrafluorpropen, 1,2,3,3,3-Pentafluorpropen, 1,1,3,3-Tetrafluorpropen, 3,3,3-Trifluorpropen, 2,3,3-Trifluorpropen, 1,1,1,2-Tetrafluorethan, 1,1,2,2-Tetrafluorethan, Pentafluorethan, Difluormethan, 1,1-Difluorethan, 1,1,1,2,3,3,3-Heptafluorpropan, 1,1,1-Trifluorpropan, 1,1,1,3,3,3-Hexafluorpropan, 1,1,1,3,3-Pentafluorpropan, 1,1,1,3,3-Pentafluorbutan, Trifluorjodmethan und Mischungen ausgewählt ist, umfassend diese; und am meisten bevorzugt die Wärmeübertragungsflüssigkeit, die 2,3,3,3-Tetrafluorpropen umfasst oder ist.

9. Wärmeübertragungsvorrichtung nach Anspruch 8, wobei der Wärmeübertragungsflüssigkeit ein Schmiermittel zugesetzt wird, das vorzugsweise aus Mineralölen, Silikonölen, Paraffinen natürlichen Ursprungs, Naphthenen, synthetischen Paraffinen, Alkylbenzolen, Polyalphaolefinen, Polyalkylenglykolen, Polyolestern und/oder Polyvinylethern ausgewählt ist; wobei das Schmiermittel besonders bevorzugt ein Polyalkylenglykol oder ein Polyolester ist.

10. Wärmeübertragungsvorrichtung nach einem der vorstehenden Ansprüche, wobei der Dampfkompressionskreislauf ein Verbindungselement oder eine Leitung ist.

11. Wärmeübertragungsvorrichtung nach einem der vorstehenden Ansprüche, wobei die Schicht, die aus einer Zusammensetzung besteht, umfassend ein Copolyamid, auf einer inneren Oberfläche des Elements angeordnet ist.

12. Wärmeübertragungsvorrichtung nach einem der vorstehenden Ansprüche, wobei das Dampfkompressionskreislaufelement ein extrudiertes Objekt ist.

13. Wärmeübertragungsvorrichtung nach einem der Ansprüche 1 bis 12, die aus bewegbaren oder stationären Klimatisierungsvorrichtungen, Kühlungsvorrichtungen, Gefriervorrichtungen, Vorrichtungen zum Erwärmen durch eine Wärmepumpe und Rankine-Zyklen ausgewählt ist, wobei die Vorrichtung vorzugsweise eine Kraftwagenklimatisierungsvorrichtung ist.

14. Verwendung eines Dampfkompressionskreislaufelements, umfassend mindestens eine Schicht, die aus einer Zusammensetzung besteht, umfassend ein Copolyamid von Formel X/10.T/Y für den Transport einer Wärmeübertragungsflüssigkeit in einem Dampfkompressionskreislauf, wobei:
- X entweder die Reste einer aliphatischen Aminosäure, umfassend von 8 bis 18 Kohlenstoffatome, oder ein Lactam oder die Einheit X₁.X₂ darstellt, die die Reste darstellt, die aus der Kondensation eines aliphatischen Diamins, umfassend von 6 bis 18 Kohlenstoffatome, und einer (cyclo)aliphatischen Disäure, umfassend von 6 bis 18 Kohlenstoffatome, stammen;
- 10.T die Reste der Kondensation eines Dekandiamins und der Terephthalsäure darstellt; und
- Y die Reste der Kondensation eines aliphatischen Diamins, umfassend von 9 bis 14 Kohlenstoffatome, und einer aromatischen Disäure darstellt, wobei Y von der Einheit 10.T verschieden ist;
der molare Anteil der Einheiten 10.T größer als 0 % ist;
der molare Anteil der Einheiten Y im Vergleich zu der Gesamtheit der Einheiten 10.T und Y von 0 bis 30 % beträgt; und
der Anteil der Einheiten X von 0,4 bis 0,8 Mol pro Mol der aromatischen Einheiten 10.T und Y beträgt,
das Element ein mehrschichtiges Rohr ist, umfassend vorzugsweise aufeinanderfolgend:
- eine innere Schicht, die die Schicht ist, die aus einer Zusammensetzung besteht, umfassend ein Copolyamid;
- wahlweise eine erste Zwischenschicht, die über dieser angeordnet ist, die aus einer ersten Zusammensetzung besteht, umfassend ein Elastomermaterial;
- wahlweise eine zweite Zwischenschicht, die über dieser angeordnet ist, die aus einer Verstärkungstextilie besteht;
- wahlweise eine äußere Schicht, die über dieser angeordnet ist, die aus einer zweiten Zusammensetzung besteht, umfassend ein Elastomermaterial;
jede Zusammensetzung umfassend ein Elastomermaterial, das vorzugsweise eine Zusammensetzung ist, umfassend ein Kautschukethylenpropylen oder ein Kautschukethylenpropylendienmonomer.

15. Verwendung nach Anspruch 14, wobei die Zusammensetzung wie in einem der Ansprüche 2 bis 7 beschrieben ist.

16. Verwendung nach Anspruch 14 oder 15, wobei die Wärmeübertragungsflüssigkeit wie in einem der Ansprüche 8 oder 9 beschrieben ist.

17. Verwendung nach einem der Ansprüche 14 bis 16, wobei die Schicht, die aus einer Zusammensetzung besteht, umfassend ein Copolyamid, eine Schicht eines Dampfkompressionskreislaufelements wie in einem der Ansprüche 1 bis 13 beschrieben ist.

18. Verfahren zum Erwärmen oder Kühlen einer Flüssigkeit oder eines Körpers mittels eines Dampfkompressionskreislaufs, der eine Wärmeübertragungsflüssigkeit enthält, das Verfahren umfassend aufeinanderfolgend die Verdampfung der Wärmeübertragungsflüssigkeit, die Kompression der Wärmeübertragungsflüssigkeit, die Kondensation der Wärmeflüssigkeit und die Entspannung der Wärmeübertragungsflüssigkeit, wobei der Dampfkompressionskreislauf ein Dampfkompressionskreislaufelement nach einem der Ansprüche 1 bis 13 umfasst.

19. Verfahren nach Anspruch 18, das ein Verfahren zum Erwärmen, Klimatisieren, Kühlen oder Gefrieren ist, und das vorzugsweise ein Verfahren zum Klimatisieren in einem Kraftfahrzeug ist.

20. Verfahren nach Anspruch 18 oder 19, wobei die Wärmeübertragungsflüssigkeit wie in Anspruch 8 oder 9 beschrieben ist.

## Claims

1. A heat transfer device including a vapor compression circuit that comprises at least one vapor compression circuit element, and preferably a plurality of such elements, said vapor compression circuit element, comprising at least one layer consisting of a composition comprising a copolyamide of formula X/10.T/Y, wherein:
- X represents either the remnants of an aliphatic amino acid comprising from 8 to 18 carbon atoms, or a lactam, or the X₁.X₂ unit representing the remnants from the condensation of an aliphatic diamine comprising from 6 to 18 carbon atoms and of a (cyclo)aliphatic diacid comprising from 6 to 18 carbon atoms;
- 10.T represents the remnants of the condensation of a decanediamine and terephthalic acid; and
- Y represents the remnants of the condensation of an aliphatic diamine comprising from 9 to 14 carbon atoms and an aromatic diacid, Y being different from the unit 10.T;
the molar ratio of 10.T units in the copolyamide being greater than 0%;
the molar ratio of Y units in relation to all of the 10.T and Y units being from 0 to 30%; and
the proportion of X units being from 0.4 to 0.8 mole for one mole of 10.T and Y semi-aromatic units,
said element being a multilayer tube, preferably successively comprising:
- an inner layer which is said layer consisting of a composition comprising a copolyamide;
- optionally, a first intermediate layer placed on top of the latter, consisting of a first composition comprising an elastomeric material;
- optionally, a second intermediate layer placed on top of the latter, consisting of a reinforcing fabric;
- an outer layer placed on top of the latter, consisting of a second composition comprising an elastomeric material;
each composition comprising an elastomeric material preferably being a composition comprising an ethylene-propylene rubber or an ethylene-propylene-diene monomer rubber.

2. The heat transfer device according to claim 1, wherein the copolyamide of formula X/10.T/Y is a copolyamide of formula X/10.T.

3. The heat transfer device according to claim 1 or 2, wherein X represents either the remnants of an aliphatic amino acid comprising from 10 to 12 carbon atoms, or the X₁.X₂ unit representing the remnants from the condensation of an aliphatic diamine comprising from 6 to 12 carbon atoms and of an aliphatic diacid comprising from 6 to 12 carbon atoms.

4. The heat transfer device according to one of claims 1 or 3, wherein Y represents a 10.1, 9.T, 12.T or 14.T unit.

5. The heat transfer device according to one of claims 1 to 3, wherein the copolyamide of formula X/10.T/Y is selected from copolyamides of formulas 11/10.T, 12/10.T, 6.10/10.T, 6.12/10.T, 10.6/10.T, 10.10/10.T, 10.12/10.T, 12.12/10.T and 10.14/10.T and in a more particularly preferred way is a copolyamide of formula 11/10.T.

6. The heat transfer device according to one of the preceding claims, wherein the proportion of X units in the copolyamide is from 0.5 to 0.7 mole for one mole of 10.T and Y semi-aromatic units.

7. The heat transfer device according to one of the preceding claims, wherein the copolyamide is present in the composition in a weight percentage of 30 to 99% preferably from 40 to 95%, in a more particularly preferred way from 50 to 85%; and/or wherein the composition further comprises:
- optionally, one or more functionalized or non-functionalized polyolefins, preferably in a weight percentage of 5 to 40%, in a more particularly preferred way from 12 to 36%;
- optionally, one or more plasticizers, preferably in a weight percentage of 1 to 10%, in a more particularly preferred way from 2 to 7%;
- optionally, one or more additives selected from processing aid adjuvants, fillers, heat stabilizers, UV stabilizers, nucleating agents, dyes, pigments, mold-release agents, flame retardants, surfactants, optical brighteners, antioxidants and mixtures thereof.

8. The heat transfer device according to one of the preceding claims, wherein the vapor compression circuit contains a heat transfer fluid selected from hydrocarbon compounds, hydrofluorocarbons, ethers, hydrofluoroethers or fluoroolefins, in particular from fluoropropenes, fluoropropanes and fluoroethanes, and in a more particularly preferred way from 1,3,3,3-tetrafluoropropene, 2,3,3,3-tetrafluoropropene, 1,2,3,3,3-pentafluoropropene, 1,1,3,3-tetrafluoropropene, 3,3,3-trifluoropropene, 2,3,3-trifluoropropene, 1,1,1,2-tetrafluoroethane, 1,1,2,2-tetrafluoroethane, pentafluoroethane, difluoromethane, 1,1-difluoroethane, 1,1,1,2,3,3,3-heptafluoropropane, 1,1,1-trifluoropropane, 1,1,1,3,3,3-hexafluoropropane, 1,1,1,3,3-pentafluoropropane, 1,1,1,3,3-pentafluorobutane, trifluoroiodomethane and mixtures thereof; and in a more particularly preferred way said heat transfer fluid comprising or being 2,3,3,3-tetrafluoropropene.

9. The heat transfer device according to claim 8, wherein the heat transfer fluid is supplemented with a lubricant, preferably selected from mineral oils, silicone oils, natural paraffins, naphthenes, synthetic paraffins, alkylbenzenes, polyalphaolefins, polyalkylene glycols, polyol esters and/or polyvinyl ethers; the lubricant being in a more particularly preferred way a polyalkylene glycol or a polyol ester.

10. The heat transfer device according to one of the preceding claims, wherein the vapor compression circuit element is a connection element or a pipe.

11. The heat transfer device according to one of the preceding claims, wherein said layer consisting of a composition comprising a copolyamide is arranged on an inner surface of the element.

12. The heat transfer device according to one of the preceding claims, wherein the vapor compression circuit element is an extruded object.

13. The heat transfer device according to one of claims 1 to 12, selected from mobile or stationary air conditioning devices, refrigeration devices, freezing devices, heat pump heaters and Rankine cycles; said device preferably being a vehicle air conditioning device.

14. A use of a vapor compression circuit element, comprising at least one layer consisting of a composition comprising a copolyamide of formula X/10.T/Y for transporting a heat transfer fluid in a vapor compression circuit, wherein:
- X represents either the remnants of an aliphatic amino acid comprising from 8 to 18 carbon atoms, or a lactam, or the X₁.X₂ unit representing the remnants from the condensation of an aliphatic diamine comprising from 6 to 18 carbon atoms and of a (cyclo)aliphatic diacid comprising from 6 to 18 carbon atoms;
- 10.T represents the remnants of the condensation of a decanediamine and terephthalic acid; and
- Y represents the remnants of the condensation of an aliphatic diamine comprising from 9 to 14 carbon atoms and an aromatic diacid, Y being different from the unit 10.T;
the molar ratio of 10.T units being greater than 0%;
the molar ratio of Y units in relation to all of the 10.T and Y units being from 0 to 30%; and
the proportion of X units being from 0.4 to 0.8 mole for one mole of 10.T and Y aromatic units,
said element being a multilayer tube, preferably successively comprising:
- an inner layer which is said layer consisting of a composition comprising a copolyimide;
- optionally, a first intermediate layer placed on top of the latter, consisting of a first composition comprising an elastomeric material;
- optionally, a second intermediate layer placed on top of the latter, consisting of a reinforcing fabric;
- an outer layer placed on top of the latter, consisting of a second composition comprising an elastomeric material;
each composition comprising an elastomeric material preferably being a composition comprising an ethylene-propylene rubber or an ethylene-propylene-diene monomer rubber.

15. The use according to claim 14, wherein the composition is as described in one of claims 2 to 7.

16. The use according to claim 14 or 15, wherein the heat transfer fluid is as described in claim 8 or 9.

17. The use according to one of claims 14 to 16, wherein the layer consisting of a composition comprising a copolyimide is a layer of a vapor compression circuit element as described in one of claims 1 to 13.

18. A method for heating or cooling a fluid or a body by means of a vapor compression circuit containing a heat transfer fluid, said method successively comprising the evaporation of the heat transfer fluid, the compression of the heat transfer fluid, the condensation of the heat fluid, and the expansion of the heat transfer fluid, in which the vapor compression circuit comprises a vapor compression circuit element according to one of claims 1 to 13.

19. The method according to claim 18, which is a heating, air conditioning, refrigeration or freezing method, and which is preferably an air conditioning method in a motor vehicle.

20. The method according to claim 18 or 19, wherein the heat transfer fluid is as described in claim 8 or 9.
